# EUROPEAN PATENT SPECIFICATION

(11) **EP 4 119 777 B1**
(45) Date of publication and mention of the grant of the patent: **07.05.2025**
(21) Application number: 21768499.2
(22) Date of filing: 11.03.2021
(51) Int. Cl.: F01N 3/08, F01N 3/20, F01N 11/00, F01N 13/00

(54) **STRADDLED VEHICLE**
GRÄTSCHSITZFAHRZEUG
VÉHICULE À SELLE

(30) Priority: 12.03.2020 WO PCT/JP2020/010777
(43) Date of publication of application: 18.01.2023
(73) Proprietor: Yamaha Hatsudoki Kabushiki Kaisha, Iwata-shi, Shizuoka 438-8501 (JP)
(72) Inventor: HAYASHIDERA, Hitoshi, Iwata-shi, Shizuoka 438-8501 (JP); MASUI, Naotsugu, Iwata-shi, Shizuoka 438-8501 (JP); SHIMIZU, Yuta, Iwata-shi, Shizuoka 438-8501 (JP)
(74) Representative: Zinkler, Franz
(86) International application number: PCT/JP2021/009909
(87) International publication number: WO 2021/182584

(56) References cited:
- JP-A- 2007 303 287
- JP-A- 2012 052 461
- JP-A- 2012 052 461
- JP-A- 2017 115 621
- JP-A- H0 734 860
- JP-A- H05 312 025
- US-A1- 2007 261 390
- US-A1- 2009 145 110

## Description

### [Technical Field]

The present teaching relates to a straddled vehicle in which a state of deterioration of a catalyst is diagnosed while the vehicle is running.

### [Background Art]

A known straddled vehicle includes a catalyst that is provided in an exhaust passage member through which exhaust gas exhausted from at least one combustion chamber passes. The catalyst of the straddled vehicle is configured to purify the exhaust gas passing through the exhaust passage member. On the upstream of the catalyst in the flow direction of the exhaust gas flowing in the exhaust passage member, an upstream oxygen concentration sensor is provided. On the downstream of the catalyst in the flow direction of the exhaust gas flowing in the exhaust passage member, a downstream oxygen concentration sensor is provided. There is a known straddled vehicle including a controller that is configured to diagnose a state of deterioration of the catalyst based on a signal from the downstream oxygen concentration sensor, while the vehicle is running. The diagnosis of the state of deterioration of the catalyst in the straddled vehicle is performed to check whether the deterioration of the catalyst has reached an intolerable level.

The controller performs fuel amount variation control by which an amount of fuel supplied to the at least one combustion chamber is increased and decreased. When a given driving condition is satisfied in the straddled vehicle which is running, a catalyst deterioration diagnosis period in which the controller diagnoses the state of deterioration of the catalyst forcibly starts. In at least part of the catalyst deterioration diagnosis period, the controller performs the fuel amount variation control by which an amount of fuel supplied to the at least one combustion chamber is increased and decreased. Based on a signal sent from the downstream oxygen concentration sensor during the catalyst deterioration diagnosis period, the controller diagnoses the state of deterioration of the catalyst. For example, according to Patent Literature 1, a controller controls the cycle and amplitude of increase and decrease of a fuel amount, which are constant in the entire catalyst deterioration diagnosis period, to be larger than the cycle and amplitude of increase and decrease of the fuel amount in a catalyst deterioration non-diagnosis period. Patent Literature 2 discloses deterioration diagnosis device for exhaust gas purification catalyst, the number of times in which an output value of a downstream-side exhaust gas sensor exceeds a downstream-side rich/lean determination level in a prescribed period of time is calculated as an inversion frequency Nr of the downstream-side exhaust gas sensor while controlling an internal combustion engine so that an output value of an upstream-side exhaust gas sensor for the catalyst is modulated by continuous wave to rich/lean. Patent Literature 3 discloses an apparatus for diagnosing an exhaust gas purifying device used in an internal combustion engine having an air-fuel ratio control unit that detects the air-fuel ratio of an exhaust gas of the internal combustion engine and regulates a fuel injection amount so as to maintain the air-fuel ratio of the exhaust gas at a predetermined value. Patent Literature 4 discloses a deterioration diagnostic system of an exhaust gas purifying catalyst provided in an exhaust passageway of an internal combustion engine, which is operable to diagnose deterioration of the exhaust gas purifying catalyst based on output signals of upstream and downstream air-fuel ratio sensors which are provided on an upstream side and a downstream side of the exhaust gas purifying catalyst.

### [Citation List]

### [Patent Literatures]

[Patent Literature 1] Japanese Unexamined Patent Publication No. H3-253714
[Patent Literature 2] Japanese Unexamined Patent Publication No. 2012-052461
[Patent Literature 3] US Patent Application Publication No. 2009/145110
[Patent Literature 1] US Patent Application Publication No. 2007/261390

### [Summary]

### [Technical Problem]

According to Patent Literature 1, the cycle and amplitude of increase and decrease of the fuel amount, which are constant in the entire catalyst deterioration diagnosis period, are larger than the cycle and amplitude of increase and decrease of the fuel amount in the catalyst deterioration non-diagnosis period. On this account, the cycle and/or amplitude of increase and decrease of the fuel amount in the entire catalyst deterioration diagnosis period is larger than the cycle and/or amplitude of increase and decrease of the fuel amount in the catalyst deterioration non-diagnosis period. When the cycle and/or amplitude of increase and decrease of the fuel amount in the catalyst deterioration diagnosis period is larger than the cycle and/or amplitude of increase and decrease of the fuel amount in the catalyst deterioration non-diagnosis period, an influence on the drivability in the catalyst deterioration diagnosis period is larger than an influence on the drivability in the catalyst deterioration non-diagnosis period.

Furthermore, because the cycle and amplitude of increase and decrease of the fuel amount, which are constant in the entire catalyst deterioration diagnosis period, are larger than the cycle and amplitude of increase and decrease of the fuel amount in the entire catalyst deterioration non-diagnosis period, an amount of atmospheric pollutant in the exhaust gas exhausted to the atmosphere in the catalyst deterioration diagnosis period may be larger than an amount of atmospheric pollutant in the exhaust gas exhausted to the atmosphere in the catalyst deterioration non-diagnosis period. On this account, the catalyst may need to be increased in size.

In addition, the longer the cycle of increase and decrease of the fuel amount in the catalyst deterioration diagnosis period is, the longer the length of the catalyst deterioration diagnosis period tends to be. Because it is difficult to ensure the catalyst deterioration diagnosis period when the catalyst deterioration diagnosis period is long, the frequency of diagnosis of the state of deterioration of the catalyst is decreased.

A straddled vehicle in which the state of deterioration of a catalyst is diagnosed while the vehicle is running is required to maintain or improve the accuracy of diagnosis of the state of deterioration of the catalyst.

The present teaching relates to a straddled vehicle in which a state of deterioration of a catalyst is diagnosed while the vehicle is running, and an object of the present teaching is to maintain or improve the accuracy and frequency of diagnosis of the state of deterioration of the catalyst and to improve the drivability of the straddled vehicle when the vehicle is running.

### [Solution to Problem]

In regard to the straddled vehicle in which the state of deterioration of the catalyst is diagnosed while the vehicle is running, the inventors of the subject application studied, in a more detailed manner, the diagnosis of the state of deterioration of the catalyst of the straddled vehicle of Patent Literature 1, in order to maintain or improve the accuracy and frequency of the diagnosis of the state of deterioration of the catalyst and to improve the drivability of the straddled vehicle when the vehicle is running.

As described above, in the straddled vehicle of Patent Literature 1, the state of deterioration of the catalyst is diagnosed based on a signal sent from the downstream oxygen concentration sensor during the catalyst deterioration diagnosis period in which the fuel amount supplied to the at least one combustion chamber is increased and decreased. The controller performs control in such a manner that the cycle and amplitude of increase and decrease of the fuel amount in the entire catalyst deterioration diagnosis period are larger than the cycle and amplitude of increase and decrease of the fuel amount in the catalyst deterioration non-diagnosis period. The cycle and amplitude of increase and decrease of the fuel amount are substantially constant in the entire catalyst deterioration diagnosis period in Patent Literature 1. The responsiveness of the downstream oxygen concentration sensor of the straddled vehicle decreases due to reasons such as the deterioration of the downstream oxygen concentration sensor itself. In Patent Literature 1, in order to successfully diagnose the state of deterioration of the catalyst with the minimum allowable responsiveness of the downstream oxygen concentration sensor, the cycle and amplitude of increase and decrease of the fuel amount in the catalyst deterioration diagnosis period are set at constant large values in the entire catalyst deterioration diagnosis period. When the amplitude or cycle of increase and decrease of fuel amount in the catalyst deterioration diagnosis period is large, there is an influence on the drivability of the running straddled vehicle. For example, because a torque variation increases as the amplitude of increase and decrease of the fuel amount increases, the acceleration or deceleration increases even though an operation made by the rider is constant, with the result that the drivability of the running straddled vehicle is influenced. Furthermore, for example, because a torque variation is delayed as the cycle of increase and decrease of the fuel amount is elongated, the rider becomes susceptible to a change in vehicle speed even though an operation made by the rider is constant, with the result that the drivability of the running straddled vehicle is influenced.

As a result of the study, the inventors of the subject application have found that, the cycle and/or amplitude of increase and decrease of the fuel amount of the running straddled vehicle can be reduced by changing the cycle and/or amplitude of increase and decrease of the fuel amount in the catalyst deterioration diagnosis period based on the responsiveness of the downstream oxygen concentration sensor. In other words, the drivability of the running straddled vehicle can be improved by reducing the cycle and/or amplitude of increase and decrease of the fuel amount of the running straddled vehicle. Furthermore, the accuracy and frequency of the diagnosis of the state of deterioration of the catalyst can be maintained or improved by changing the cycle and/or amplitude of increase and decrease of the fuel amount in the catalyst deterioration diagnosis period based on the responsiveness of the downstream oxygen concentration sensor.
(1) A straddled vehicle of the present teaching comprises: an engine which includes at least one combustion chamber; an exhaust passage member through which exhaust gas exhausted from the at least one combustion chamber passes; a catalyst which is provided in the exhaust passage member to purify the exhaust gas; an upstream oxygen concentration sensor which is provided upstream of the catalyst in a flow direction of the exhaust gas flowing in the exhaust passage member and is configured to detect oxygen concentration in the exhaust gas; a downstream oxygen concentration sensor which is provided downstream of the catalyst in the flow direction of the exhaust gas flowing in the exhaust passage member and is configured to detect oxygen concentration in the exhaust gas; a fuel supplier which is configured to supply fuel to the at least one combustion chamber; and a controller which is configured to perform fuel amount variation control of increasing and decreasing a fuel amount supplied to the at least one combustion chamber by controlling the fuel supplier in at least part of a catalyst deterioration diagnosis period in which a state of deterioration of the catalyst is diagnosed and at least part of a catalyst deterioration non-diagnosis period in which the state of deterioration of the catalyst is not diagnosed, and to diagnose the state of deterioration of the catalyst at least based on a signal supplied from the downstream oxygen concentration sensor in the catalyst deterioration diagnosis period.

The controller is configured to: (I) diagnose the state of deterioration of the catalyst while the straddled vehicle is running at vehicle speed that is higher than 0; (II) in the at least part of the catalyst deterioration diagnosis period, perform the fuel amount variation control so that (1) a first cycle that is a cycle of increase and decrease of the fuel amount when responsiveness of the downstream oxygen concentration sensor is high is shorter than a second cycle that is a cycle of increase and decrease of the fuel amount when the responsiveness of the downstream oxygen concentration sensor is low and/or (2) a first amplitude that is an amplitude of increase and decrease of the fuel amount when the responsiveness of the downstream oxygen concentration sensor is high is smaller than a second amplitude that is an amplitude of increase and decrease of the fuel amount when the responsiveness of the downstream oxygen concentration sensor is low; and (III) in the at least part of the catalyst deterioration diagnosis period, suppress a cycle and/or amplitude of increase and decrease of the fuel amount while the straddled vehicle is running, as compared to a case if the fuel amount variation control is performed so that a cycle and amplitude of increase and decrease of the fuel amount are identical with the second cycle and the second amplitude irrespective of the responsiveness of the downstream oxygen concentration sensor.

According to this arrangement, the controller diagnoses the state of deterioration of the catalyst while the straddled vehicle is running at vehicle speed higher than 0. In at least part of the catalyst deterioration diagnosis period in which the state of deterioration of the catalyst is diagnosed, the controller controls the cycle of increase and decrease of the fuel amount and/or the amplitude of increase and decrease of the fuel amount based on the responsiveness of the downstream oxygen concentration sensor. To be more specific, the controller performs the fuel amount variation control so that a first cycle that is a cycle of increase and decrease of the fuel amount when the responsiveness of the downstream oxygen concentration sensor is high is shorter than a second cycle that is a cycle of increase and decrease of the fuel amount when the responsiveness of the downstream oxygen concentration sensor is low. In addition to or in place of this, the controller performs the fuel amount variation control so that a first amplitude that is an amplitude of increase and decrease of the fuel amount when the responsiveness of the downstream oxygen concentration sensor is high is smaller than a second amplitude that is an amplitude of increase and decrease of the fuel amount when the responsiveness of the downstream oxygen concentration sensor is low. With this arrangement, in the least part of the catalyst deterioration diagnosis period, the controller suppresses the cycle and/or amplitude of increase and decrease of the fuel amount while the straddled vehicle is running, as compared to a case if the fuel amount variation control is performed so that a cycle and amplitude of increase and decrease of the fuel amount are identical with the second cycle and the second amplitude that are in cases where the responsiveness of the downstream oxygen concentration sensor is low, irrespective of the responsiveness of the downstream oxygen concentration sensor. On this account, according to the present teaching, in the straddled vehicle in which the state of deterioration of the catalyst is diagnosed while the vehicle is running, the accuracy and frequency of diagnosis of the state of deterioration of the catalyst are maintained or improved, while the drivability of the straddled vehicle when the vehicle is running is improved.

(2) According to another aspect of the present teaching, the straddled vehicle of the present teaching may include the following arrangement, in addition to the arrangement (1).

The controller stores responsiveness data related to the responsiveness of the downstream oxygen concentration sensor.

In the at least part of the catalyst deterioration diagnosis period, based on the responsiveness data related to the responsiveness of the downstream oxygen concentration sensor, the controller performs the fuel amount variation control so that (1) the first cycle that is a cycle of increase and decrease of the fuel amount when the responsiveness data related to the responsiveness of the downstream oxygen concentration sensor is high is shorter than the second cycle that is a cycle of increase and decrease of the fuel amount when the responsiveness data related to the responsiveness of the downstream oxygen concentration sensor is low and/or (2) the first amplitude that is an amplitude of increase and decrease of the fuel amount when the responsiveness data related to the responsiveness of the downstream oxygen concentration sensor is high is smaller than the second amplitude that is an amplitude of increase and decrease of the fuel amount when the responsiveness data related to the responsiveness of the downstream oxygen concentration sensor is low.

According to this arrangement, the controller is able to suppress the cycle and/or amplitude of increase and decrease of the fuel amount while the straddled vehicle is running, based on the stored responsiveness data related to the responsiveness of the downstream oxygen concentration sensor.

(3) According to another aspect of the present teaching, the straddled vehicle of the present teaching may include the following arrangement, in addition to the arrangement (1) or (2).

The controller stores an association between responsiveness and fuel amount, which associates the responsiveness of the downstream oxygen concentration sensor with the fuel amount supplied during the catalyst deterioration diagnosis period; and

In the at least part of the catalyst deterioration diagnosis period, based on the stored association between responsiveness and fuel amount, the controller performs the fuel amount variation control so that (1) the first cycle that is a cycle of increase and decrease of the fuel amount when responsiveness of the downstream oxygen concentration sensor is high is shorter than the second cycle that is a cycle of increase and decrease of the fuel amount when the responsiveness of the downstream oxygen concentration sensor is low and/or (2)the first amplitude that is an amplitude of increase and decrease of the fuel amount when the responsiveness of the downstream oxygen concentration sensor is high is smaller than the second amplitude that is an amplitude of increase and decrease of the fuel amount when the responsiveness of the downstream oxygen concentration sensor is low.

According to this arrangement, the cycle and/or amplitude of increase and decrease of the fuel amount while the straddled vehicle is running can be suppressed based on the stored association between responsiveness and fuel amount.

(4) According to another aspect of the present teaching, the straddled vehicle of the present teaching may include the following arrangement, in addition to any one of the arrangements (1) to (3).

In the at least part of the catalyst deterioration diagnosis period, based on the responsiveness of the downstream oxygen concentration sensor, the controller performs the fuel amount variation control so that (1) the first cycle that is a cycle of increase and decrease of the fuel amount when the responsiveness of the downstream oxygen concentration sensor is high is shorter than a third cycle that is a cycle of increase and decrease of the fuel amount when the responsiveness of the downstream oxygen concentration sensor is moderate and the third cycle that is a cycle of increase and decrease of the fuel amount when the responsiveness of the downstream oxygen concentration sensor is moderate is shorter than the second cycle that is a cycle of increase and decrease of the fuel amount when the responsiveness of the downstream oxygen concentration sensor is low and/or (2) the first amplitude that is an amplitude of increase and decrease of the fuel amount when the responsiveness of the downstream oxygen concentration sensor is high is smaller than a third amplitude that is an amplitude of increase and decrease of the fuel amount when the responsiveness of the downstream oxygen concentration sensor is moderate and the third amplitude that is an amplitude of increase and decrease of the fuel amount when the responsiveness of the downstream oxygen concentration sensor is moderate is smaller than the second amplitude that is an amplitude of increase and decrease of the fuel amount when the responsiveness of the downstream oxygen concentration sensor is low.

According to this arrangement, in the at least part of the catalyst deterioration diagnosis period in which the state of deterioration of the catalyst is diagnosed, the controller controls the cycle of increase and decrease of the fuel amount and/or the amplitude of increase and decrease of the fuel amount based on the responsiveness of the downstream oxygen concentration sensor. To be more specific, the controller performs control so that a first cycle that is a cycle of increase and decrease of the fuel amount when the responsiveness of the downstream oxygen concentration sensor is high is shorter than a third cycle that is a cycle of increase and decrease of the fuel amount when the responsiveness of the downstream oxygen concentration sensor is moderate and the third cycle that is a cycle of increase and decrease of the fuel amount when the responsiveness of the downstream oxygen concentration sensor is moderate is shorter than a second cycle that is a cycle of increase and decrease of the fuel amount when the responsiveness of the downstream oxygen concentration sensor is low. The controller performs control so that a first amplitude that is an amplitude of increase and decrease of the fuel amount when the responsiveness of the downstream oxygen concentration sensor amplitude is high is smaller than a third amplitude that is an amplitude of increase and decrease of the fuel amount when the responsiveness of the downstream oxygen concentration sensor is moderate and the third amplitude that is an amplitude of increase and decrease of the fuel amount when the responsiveness of the downstream oxygen concentration sensor is moderate is smaller than a second amplitude that is an amplitude of increase and decrease of the fuel amount when the responsiveness of the downstream oxygen concentration sensor is low. As a result of this, the controller is able to suppress the cycle and/or amplitude of increase and decrease of the fuel amount while the straddled vehicle is running. In this regard, straddled vehicles are light in weight as compared to four-wheeled vehicles. According to the present teaching, in the straddled vehicle in which an engine output greatly changes in response to increase and decrease of a fuel amount relative to the vehicle weight, the drivability of the running straddled vehicle can be further improved by finely controlling the cycle or amplitude of increase and decrease of the fuel amount in the fuel amount variation control.

(5) According to another aspect of the present teaching, the straddled vehicle of the present teaching may include the following arrangement, in addition to any one of the arrangements (1) to (4).

The engine is an independent-throttle engine in which at least one dedicated throttle valve is provided for each of the at least one combustion chamber

In the at least part of the catalyst deterioration diagnosis period, the controller suppress a cycle and/or amplitude of increase and decrease of the fuel amount supplied to the independent-throttle engine while the straddled vehicle is running, as compared to a case if the fuel amount variation control is performed so that a cycle and amplitude of increase and decrease of the fuel amount are identical with the second cycle and the second amplitude irrespective of the responsiveness of the downstream oxygen concentration sensor.

According to this arrangement, when an independent throttle engine in which at least one dedicated throttle valve is provided for each of at least one combustion chamber is employed, the drivability is susceptible to an influence of a cycle and/or amplitude of increase and decrease of a fuel amount as compared to an engine in which one surge tank and at least one throttle valve are provided for plural combustion chambers. According to the present teaching, while the straddled vehicle is running, the controller suppresses the cycle and/or amplitude of increase and decrease of the fuel amount supplied to the independent-throttle engine. It is therefore possible to further improve the drivability of the running straddled vehicle having the independent-throttle engine.

(6) According to another aspect of the present teaching, the straddled vehicle of the present teaching may include the following arrangement, in addition to any one of the arrangements (1) to (5).

The engine is a flywheel magnet engine in which a rotor of a generator or a starter generator including a permanent magnet and provided at one end of a crankshaft functions as a flywheel. In the at least part of the catalyst deterioration diagnosis period, the controller suppress a cycle and/or amplitude of increase and decrease of the fuel amount supplied to the flywheel magnet engine while the straddled vehicle is running, as compared to a case if the fuel amount variation control is performed so that a cycle and amplitude of increase and decrease of the fuel amount are identical with the second cycle and the second amplitude irrespective of the responsiveness of the downstream oxygen concentration sensor.

According to the arrangement above, a flywheel magnet engine in which a rotor having a permanent magnet of a generator or a starter generator and provided at one end of a crankshaft functions as a flywheel is used for a light-weight straddled vehicle, as compared to an engine in which a rotor does not function as a flywheel. To put it differently, a flywheel magnet engine in which a rotor having a permanent magnet of a generator or a starter generator and provided at one end of a crankshaft functions as a flywheel has a high power weight ratio and a large change of an engine output in response to increase and decrease of a fuel amount, as compared to an engine in which a rotor does not function as a flywheel. According to the present teaching, in the straddled vehicle in which an engine output greatly changes in response to increase and decrease of a fuel amount relative to the vehicle weight, the drivability of the running straddled vehicle can be further improved by finely controlling the cycle or amplitude of increase and decrease of the fuel amount in the fuel amount variation control.

(7) According to another aspect of the present teaching, the straddled vehicle of the present teaching may include the following arrangement, in addition to any one of the arrangements (1) to (6).

In the at least part of the catalyst deterioration diagnosis period, the controller performs the fuel amount variation control based on the responsiveness of the downstream oxygen concentration sensor in the catalyst deterioration non-diagnosis period.

According to this arrangement, the controller is able to suppress the cycle and/or amplitude of increase and decrease of the fuel amount while the straddled vehicle is running, based on the responsiveness of the downstream oxygen concentration sensor in the catalyst deterioration non-diagnosis period in which the state of deterioration of the catalyst is not diagnosed.

### <Definition of Straddled Vehicle>

In the present teaching and the embodiments, a straddled vehicle refers to all vehicles in which a rider (driver) rides in a state of straddling a saddle. The straddled vehicle runs on a road surface. The road surface includes a ground surface, a snowy surface, and a water surface. At this point, the ground may be a paved surface or a surface with soil. The straddled vehicle may or may not include plural wheels. The straddled vehicle may include one or two front wheels and one or two rear wheels. Either the front wheel or the rear wheel may be steered. The straddled vehicle of the present teaching includes a motorcycle, a motor tricycle, a four-wheeled buggy (ATV: All Terrain Vehicle), a snowmobile, a personal watercraft, and the like.

### <Definition of Engine>

In the present teaching and the embodiments, an engine is a power source (drive source) which is configured to generate power for running a straddled vehicle. Fuel of the engine includes gasoline, alcohol, a mixture of gasoline and alcohol, and light oil. The straddled vehicle may include both an electric motor and an engine as the power source. When the straddled vehicle include wheels, the wheel driven by the power source may be a front wheel, a rear wheel, or both the front wheel and the rear wheel. The engine may be a four-stroke engine or a two-stroke engine. The engine may or may not include a canister. The engine may or may not include a forced induction device. The forced induction device may be a turbocharger or a supercharger. The engine may be a single-cylinder engine having one combustion chamber or a multi-cylinder engine having plural combustion chambers. The arrangement of the cylinders (combustion chambers) in the multi-cylinder engine is not particularly limited. In the multi-cylinder engine, the cycle and amplitude of increase and decrease of a fuel amount supplied to each combustion chamber in fuel amount variation control of the present invention is substantially identical between the combustion chambers. A timing of fuel supply may be different between the combustion chambers. When the number of the combustion chambers is four or more, a timing of fuel supply may be identical between two of the combustion chambers.

### <Definition of Fuel Supplier>

In the present teaching and the embodiments, a fuel supplier is an apparatus configured to indirectly or directly supply fuel to at least one combustion chamber. The fuel supplier may be a fuel injector configured to inject fuel to an independent intake passage member, or a fuel injector configured to inject fuel to each of the at least one combustion chamber. The independent intake passage member is an intake passage member through which air supplied to each of the at least one combustion chamber passes. The intake passage member indicates a wall member such as an intake pipe, which forms an intake passage that is a space allowing intake air to pass therethrough, by surrounding the intake passage.

### <Definition of Catalyst>

In the present teaching and the embodiments, a catalyst is configured to purify exhaust gas passing through an exhaust passage member. In the present teaching and the embodiments, examples of the catalyst includes a three way catalyst (TWC), an oxidation catalyst (DOC), an NOx selective catalytic reduction (SCR) catalyst, and a lean NOx trap (LNT) catalyst. The three way catalyst is a catalyst which is configured to mainly remove atmospheric pollutant that is three materials in exhaust gas, i.e., hydrocarbon (HC), carbon monoxide (CO), and nitrogen oxide (NOx), by oxidation or reduction. The three way catalyst is, for example, a catalyst including platinum (Pt), palladium (Pd), and rhodium (Rh). The three way catalyst purifies exhaust gas by oxidizing or reducing hydrocarbon to water and carbon dioxide, carbon monoxide to carbon dioxide, and nitrogen oxide to nitrogen. The NOx selective catalytic reduction (SCR) catalyst includes at least one element selected from a group consisting of metal-substituted zeolite, vanadium, titania, tungsten oxide, silver, and alumina. The lean NOx trap catalyst includes, for example, alkali metal and/or alkali earth metal. Examples of the alkali metal include potassium, natrium, and lithium. An example of the alkali earth metal is calcium. The catalyst may be a catalyst which removes one or two of hydrocarbon, carbon monoxide, and nitrogen oxide. The catalyst may not be an oxidation-reduction catalyst. The catalyst may be an oxidation catalyst or a reduction catalyst which removes atmospheric pollutant by only oxidation or reduction. The catalyst is arranged so that noble metal having an exhaust gas purification effect is adhered to a base. The catalyst may be a catalyst with a metal base or a catalyst with a ceramic base.

### <Definition of Oxygen Concentration Sensor>

In the present teaching and the embodiments, an oxygen concentration sensor is a sensor configured to detect the concentration of oxygen in exhaust gas passing through an exhaust passage member. The oxygen concentration sensor encompasses an O2 sensor and a linear A/F sensor. In the specification of the subject application, the O2 sensor is configured to only detect that the oxygen concentration in the exhaust gas is higher than a first concentration or is lower than a second concentration. The first concentration is higher than or equal to the second concentration. When the upstream oxygen concentration sensor is the O2 sensor, whether the air-fuel ratio of air-fuel mixture is in a rich state or a lean state is detected based on a signal from the upstream oxygen concentration sensor. The rich state indicates a state in which fuel is excessive as compared to a target air-fuel ratio. The lean state indicates a state in which air is excessive as compared to the target air-fuel ratio. The target air-fuel ratio may be a value or a range encompassing the stoichiometric air-fuel ratio, or may be a value or a range slightly deviated from the stoichiometric air-fuel ratio. The O2 sensor has a sensor element composed of a solid electrolyte body mainly made of zirconia. The O2 sensor is able to detect the oxygen concentration when the sensor element is heated to a high temperature and becomes in an activated state. The linear A/F sensor is configured to continuously detect changes of the oxygen concentration in the exhaust gas.

### <Definition of Controller>

In the present teaching and the embodiments, a controller is an apparatus which includes a processor and a storage device and is configured to perform at least diagnosis of deterioration of a catalyst and fuel amount variation control described in the present teaching and the embodiments. The controller is, for example, an ECU (Engine Control Unit). The processor encompasses a microcontroller, a central processing unit (CPU), a microprocessor, a multiprocessor, an application specific integrated circuit (ASIC), a programmable logic circuit (PLC), a field programmable gate array (FPGA), and any other circuits capable of performing the diagnosis of the state of deterioration of the catalyst and the fuel amount variation control described in the present teaching and the embodiments. The storage device is a device for storing data and programs. The storage device encompasses semiconductor memories such as a resistor and a cash memory, a main memory (a main storage or a RAM), and a storage (an external storage device or an auxiliary storage device).

### <Definition of Diagnosis of State of Deterioration of Catalyst>

In the present teaching and the embodiments, a controller is configured to diagnose a state of deterioration of a catalyst based on a signal from a downstream oxygen concentration sensor. For example, the controller diagnoses the state of deterioration of the catalyst based on (i) a catalyst deterioration determination value which is obtained from the signal detected by the downstream oxygen concentration sensor in the catalyst deterioration diagnosis period and relates to the deterioration of the catalyst and (ii) a catalyst deterioration determination threshold which is set in advance. Furthermore, for example, the controller diagnoses the state of deterioration of the catalyst by correcting the catalyst deterioration determination threshold based on responsiveness data related to the responsiveness of the downstream oxygen concentration sensor and comparing the catalyst deterioration determination value with the corrected catalyst deterioration determination threshold. Furthermore, for example, the controller diagnoses the state of deterioration of the catalyst by correcting the catalyst deterioration determination value based on responsiveness data related to the responsiveness of the downstream oxygen concentration sensor and comparing the corrected catalyst deterioration determination value with the catalyst deterioration determination threshold. The controller may diagnose the state of deterioration of the catalyst without taking into account of the magnitude of the obtained responsiveness data related to the responsiveness of the downstream oxygen concentration sensor. The controller may not diagnose the state of deterioration of the catalyst when the obtained responsiveness data related to the responsiveness of the downstream oxygen concentration sensor is larger than a diagnosis performing threshold.

### <Definition of Catalyst Deterioration Diagnosis Period>

In the present teaching and the embodiments, a catalyst deterioration diagnosis period is a period during which a state of deterioration of a catalyst is diagnosed. The catalyst deterioration diagnosis period includes a period in which fuel amount variation control of increasing and decreasing a fuel amount supplied to at least one combustion chamber is performed in order to allow a controller to diagnose a state of deterioration of a catalyst while a straddled vehicle is running at vehicle speed not lower than 0. The catalyst deterioration diagnosis period varies depending on the type of the straddled vehicle and a driving condition. The catalyst deterioration diagnosis period is, for example, about 20 seconds. For example, the controller may diagnose the state of deterioration of the catalyst plural times in each driving cycle of driving the straddled vehicle, may diagnose the state once in each driving cycle of driving the straddled vehicle, or may diagnose the state once in plural driving cycles of driving the straddled vehicle. From a time at which the catalyst is not deteriorated to a time at which the catalyst is deteriorated, plural catalyst deterioration diagnosis periods may be provided, or only one catalyst deterioration diagnosis period may be provided. The state of deterioration of the catalyst may be diagnosed once based on a signal sent from the downstream oxygen concentration sensor in one catalyst deterioration diagnosis period, or the state of deterioration of the catalyst may be diagnosed once based on signals sent from the downstream oxygen concentration sensor in plural catalyst deterioration diagnosis periods.

### <Definition of Fuel Amount Variation Control>

In the present teaching and the embodiments, a fuel amount variation control is a control that is performed by a controller and with which a fuel amount supplied to at least one combustion chamber is increased and decreased. A cycle of increase and decrease of a fuel amount is a period of time from a time point at which the trend of the fuel amount changes from increase to decrease to the next time point at which the trend of the fuel amount changes from increase to decrease, when the controller is performing control with which the fuel amount repeatedly increases and decreases. Alternatively, a cycle of increase and decrease of a fuel amount is a period of time from a time point at which the trend of the fuel amount changes from decrease to increase to the next time point at which the trend of the fuel amount changes from decrease to increase, when the controller is performing control with which the fuel amount repeatedly increases and decreases. An amplitude of increase and decrease of a fuel amount indicates a difference between the minimum fuel amount and the maximum fuel amount, when the controller is performing control with which the fuel amount repeatedly increases and decreases. In other words, an amplitude of increase and decrease of a fuel amount indicates a difference between a fuel amount when the trend of the fuel amount changes from decrease to increase and a fuel amount when the trend of the fuel amount changes from increase to decrease, when the controller is performing control with which the fuel amount repeatedly increases and decreases.

In at least part of the catalyst deterioration non-diagnosis period, the controller performs fuel amount variation control of increasing and decreasing a fuel amount supplied to at least one combustion chamber by means of feedback control based on a signal from an upstream oxygen concentration sensor. In at least part of the catalyst deterioration diagnosis period, the controller may perform fuel amount variation control of increasing and decreasing a fuel amount supplied to at least one combustion chamber by means of feedback control based on a signal from the upstream oxygen concentration sensor. In at least part of the catalyst deterioration diagnosis period, the controller may perform fuel amount variation control not based on a signal from the upstream oxygen concentration sensor.

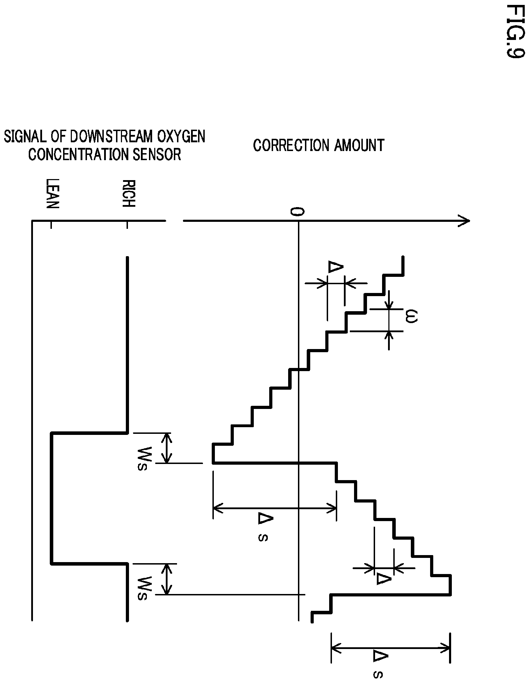

In the fuel amount variation control, the controller corrects the fuel amount so that the fuel amount repeatedly increases and decreases. In the fuel amount variation control, the controller determines the fuel amount by increasing or decreasing a correction amount relative to a basic fuel amount. For example, the basic fuel amount is set at a fuel amount with which a target air-fuel ratio is achieved relative to an intake air amount that is calculated by using a map in which a throttle opening degree and an engine rotation speed are associated with an intake air amount and/or a map in which an intake pressure and an engine rotation speed are associated with an intake air amount. In the feedback control, the controller determines the correction amount that is added to or subtracted from the basic fuel amount, based on a signal from the upstream oxygen concentration sensor. In the fuel amount variation control, the controller may determine the correction amount not based on a signal from the upstream oxygen concentration sensor. The correction amount will be described with reference to FIG. 9. FIG. 9 shows the relationship between the correction amount added to or subtracted from the basic fuel amount and an output value of the oxygen concentration sensor. Although addition and subtraction of the correction amount to and from the basic fuel amount are both performed in FIG. 9, the correction amount may only be added to or subtracted from the basic fuel amount, depending on at which value the basic fuel amount is set. The correction amount is, for example, a value calculated by adding or subtracting a correction variable Δ or a skip variable Δs to or from the previous correction amount, each time a predetermined correction amount maintenance time ω elapses. The correction variable Δ is an amount of increase when the fuel amount is increasing or an amount of decrease when the fuel amount is decreasing. The skip variable Δs is an amount of decrease when the trend of the fuel amount changes from increase to decrease, or an amount of increase when the trend of the fuel amount changes from decrease to increase. The correction amount maintenance time ω is a time during which the correction amount is maintained or a time between ejection and the next ejection. The correction variable Δ when the fuel amount is increasing is identical with or different from the correction variable Δ when the fuel amount is decreasing. The correction variable Δ while the fuel amount is increasing is constant or changed. The correction variable Δ while the fuel amount is decreasing is constant or changed. The skip variable Δs when the trend of the fuel amount changes from increase to decrease is identical with or different from the skip variable Δs when the trend of the fuel amount changes from decrease to increase. When the fuel amount variation control is feedback control based on a signal from the upstream oxygen concentration sensor, the controller increases or decreases the correction amount by the skip variable Δs, when a predetermined reversal waiting time Ws elapses from a time point of a change of a signal from the upstream oxygen sensor. For example, when the upstream oxygen concentration sensor is an O2 sensor, the controller increases or decreases the correction amount by the skip variable Δs, when a predetermined reversal waiting time Ws elapses from a time point at which a signal from the upstream oxygen concentration sensor changes from a signal indicating a rich state to a signal indicating a lean state or a time point at which the signal from the upstream oxygen concentration sensor changes from the signal indicating the lean state to the signal indicating the rich state. The controller suitably sets the reversal waiting time Ws, the correction amount maintenance time ω, the correction variable Δ, and the skip variable Δs. The reversal waiting time Ws in the catalyst deterioration diagnosis period is identical with or longer than the reversal waiting time Ws in the catalyst deterioration non-diagnosis period. The correction amount maintenance time ω, the correction variable Δ, and the step variable Δs in the catalyst deterioration diagnosis period may be identical with the correction amount maintenance time ω, the correction variable Δ, and the step variable Δs in the catalyst deterioration non-diagnosis period. At least one of the correction amount maintenance time ω, the correction variable Δ, or the step variable Δs in the catalyst deterioration diagnosis period may be larger than at least one of the correction amount maintenance time ω, the correction variable Δ, or the step variable Δs in the catalyst deterioration non-diagnosis period. The correction amount maintenance time ω, the correction variable Δ, and the step variable Δs used for the fuel amount variation control in the catalyst deterioration non-diagnosis period may be set at values that are experimentally determined in advance. The correction variable used for the fuel amount variation control includes zero.

### <Definition of Responsiveness of Downstream Oxygen Concentration Sensor>

In the present teaching and the embodiments, the responsiveness of a downstream oxygen concentration sensor indicates characteristics of response when the downstream oxygen concentration sensor detects oxygen concentration. In other words, the responsiveness of the downstream oxygen concentration sensor indicates a temporal delay of a change of a signal output from the downstream oxygen concentration sensor from a change of the oxygen concentration. For example, a state in which the responsiveness of the downstream oxygen concentration sensor is high is a state in which a temporal delay of a change of a signal output from the downstream oxygen concentration sensor from a change of the oxygen concentration is small as compared to a state in which the responsiveness of the downstream oxygen concentration sensor is low. Meanwhile, for example, a state in which the responsiveness of the downstream oxygen concentration sensor is low is a state in which a temporal delay of a change of a signal output from the downstream oxygen concentration sensor from a change of the oxygen concentration is large as compared to a state in which the responsiveness of the downstream oxygen concentration sensor is high. Furthermore, for example, a state in which the responsiveness of the downstream oxygen concentration sensor is moderate is a state in which a temporal delay of a change of a signal output from the downstream oxygen concentration sensor from a change of the oxygen concentration is small as compared to a state in which the responsiveness of the downstream oxygen concentration sensor is low and the temporal delay of the change of the signal output from the downstream oxygen concentration sensor is large as compared to a state in which the responsiveness of the downstream oxygen concentration sensor is high. The responsiveness of the downstream oxygen concentration sensor is expressed by a time required for a change of a signal from the downstream oxygen concentration sensor by a unit amount or an amount of change of a signal from the downstream oxygen concentration sensor during a unit time. It is noted that a change of a signal from the downstream oxygen concentration sensor encompasses a change of a state (e.g., of a voltage value) of the signal of the downstream oxygen concentration sensor from low to high and a change of the state of the signal of the downstream oxygen concentration sensor from high to low.

### <Definition of Responsiveness Data Related to Responsiveness of Downstream Oxygen Concentration Sensor>

In the present teaching and the embodiments, sets of responsiveness data related to the responsiveness of a downstream oxygen concentration sensor are, for example, the following ones.
(1) Rise Time: A rise time is a time required for a change by a predetermined unit amount of a signal from the downstream oxygen concentration sensor when the signal from the downstream oxygen concentration sensor is changing from a low state to a high state.
(2) Rise Amount: A rise amount is an amount of change of a signal from the downstream oxygen concentration sensor in a unit time when the signal from the downstream oxygen concentration sensor is changing from a low state to a high state.
(3) Fall Time: A fall time is a time required for a change by a predetermined unit amount of a signal from the downstream oxygen concentration sensor when the signal from the downstream oxygen concentration sensor is changing from a high state to a low state.
(4) Fall Amount: A fall amount is an amount of change of a signal from the downstream oxygen concentration sensor in a unit time when the signal from the downstream oxygen concentration sensor is changing from a high state to a low state.

The responsiveness data related to the responsiveness of the downstream oxygen concentration sensor is preferably a fall time or a fall amount with which the signal from the downstream oxygen concentration sensor is easily detectable. The responsiveness data related to the responsiveness of the downstream oxygen concentration sensor is more preferably a fall time with which the signal from the downstream oxygen concentration sensor is more easily detectable. A unit amount or a unit time indicates a predetermined amount or a predetermined time, and is either (i) an amount or a time from a first value to a second value smaller than the first value or (ii) an amount or a time from the first value to a third value larger than the first value.

In the present teaching and the embodiments, the responsiveness data related to the responsiveness of the downstream oxygen concentration sensor may be a fall time or a fall amount of the downstream oxygen concentration sensor when a fuel amount supplied to at least one combustion chamber rapidly decreases.

In the present teaching and the embodiments, the responsiveness data related to the responsiveness of the downstream oxygen concentration sensor may be responsiveness data related to the responsiveness of the downstream oxygen concentration sensor, which is stored in the controller at the start of the diagnosis of the deterioration of the catalyst. The controller may use responsiveness data related to the responsiveness of the downstream oxygen concentration sensor, which is closest to the current time, among stored sets of responsiveness data related to the responsiveness of the downstream oxygen concentration sensor in the non-diagnosis period. In the present teaching and the embodiments, storing encompasses temporal storing. In the present teaching and the embodiments, the responsiveness data related to the responsiveness of the downstream oxygen concentration sensor may be generated based on a signal from the downstream oxygen concentration sensor detected in the catalyst deterioration diagnosis period or a signal from the downstream oxygen concentration sensor detected in the catalyst deterioration non-diagnosis period. The responsiveness data related to the responsiveness of the downstream oxygen concentration sensor may be obtained based on a signal sent from the downstream oxygen concentration sensor at a single time point, or may be obtained based on signals sent from the downstream oxygen concentration sensor at plural time points. When the responsiveness data related to the responsiveness of the downstream oxygen concentration sensor is obtained based on signals sent from the downstream oxygen concentration sensor at plural time points, the data may be obtained based on an average, a deviation value, etc., of the signals sent from the downstream oxygen concentration sensor at the plural time points. The controller may store responsiveness data related to the responsiveness of the downstream oxygen concentration sensor at a single time point, or responsiveness data related to the responsiveness of the downstream oxygen concentration sensor at plural time points.

For example, the responsiveness of the downstream oxygen concentration sensor may be obtained based on at least one of (i) a fall time or a fall amount of a signal from the downstream oxygen concentration sensor when fuel cut control is performed in the catalyst deterioration non-diagnosis period or the catalyst deterioration diagnosis period or (ii) a rise time or a rise amount of a signal from the downstream oxygen concentration sensor when the fuel cut control is terminated in the catalyst deterioration non-diagnosis period or the catalyst deterioration diagnosis period. The fuel cut control is control with which supply of fuel to at least one combustion chamber is temporarily stopped. The responsiveness of the downstream oxygen concentration sensor may be obtained based on at least one of (i) a fall time or a fall amount of a signal from the downstream oxygen concentration sensor when, in the catalyst deterioration non-diagnosis period or the catalyst deterioration diagnosis period, the fuel amount supplied to at least one combustion chamber rapidly decreases even though the supply of the fuel to the at least one combustion chamber is not temporarily stopped, or (ii) a rise time or a rise amount of a signal from the downstream oxygen concentration sensor after a rapid decrease of the fuel supplied to the at least one combustion chamber in the catalyst deterioration non-diagnosis period or the catalyst deterioration diagnosis period is terminated. In regard to the responsiveness of the downstream oxygen concentration sensor, the responsiveness data may be generated without using a signal from the downstream oxygen concentration sensor. For example, the responsiveness of the downstream oxygen concentration sensor may be estimated based on a relevancy map of the relationship between the responsiveness of the downstream oxygen concentration sensor, an accumulative driving time, a running distance, and so on.

### <Definition of Association between Responsiveness and Fuel Amount>

In the present teaching and the embodiments, an association between responsiveness and fuel amount is information in which the responsiveness of a downstream oxygen concentration sensor is associated with a fuel amount supplied in a catalyst deterioration diagnosis period. The association between responsiveness and fuel amount may be a mathematical formula or a map. The controller may store the association between responsiveness and fuel amount in advance, or may obtain it from the outside and temporarily store it. The association between responsiveness and fuel amount is set so that (1) a first cycle that is a cycle of increase and decrease of the fuel amount when the responsiveness of the downstream oxygen concentration sensor is high is shorter than a second cycle that is a cycle of increase and decrease of the fuel amount when the responsiveness of the downstream oxygen concentration sensor is low and/or (2) a first amplitude that is an amplitude of increase and decrease of the fuel amount when the responsiveness of the downstream oxygen concentration sensor is high is smaller than a second amplitude that is an amplitude of increase and decrease of the fuel amount when the responsiveness of the downstream oxygen concentration sensor is low.

In the case of (1) described above, the association between responsiveness and fuel amount may be set as follows, for example. The second cycle that is a cycle of increase and decrease of the fuel amount supplied in the catalyst deterioration diagnosis period when the responsiveness of the downstream oxygen concentration sensor is low may or may not be changed in accordance with the responsiveness of the downstream oxygen concentration sensor. The first cycle that is a cycle of increase and decrease of the fuel amount supplied in the catalyst deterioration diagnosis period when the responsiveness of the downstream oxygen concentration sensor is high may or may not be changed in accordance with the responsiveness of the downstream oxygen concentration sensor. For example, the second cycle may not be changed in accordance with the responsiveness of the downstream oxygen concentration sensor, and the first cycle may be changed in accordance with the responsiveness of the downstream oxygen concentration sensor.

In the case of (2) described above, the association between responsiveness and fuel amount may be set as follows, for example. The second amplitude that is an amplitude of increase and decrease of the fuel amount supplied in the catalyst deterioration diagnosis period when the responsiveness of the downstream oxygen concentration sensor is low may or may not be changed in accordance with the responsiveness of the downstream oxygen concentration sensor. The first amplitude that is an amplitude of increase and decrease of the fuel amount supplied in the catalyst deterioration diagnosis period when the responsiveness of the downstream oxygen concentration sensor is high may or may not be changed in accordance with the responsiveness of the downstream oxygen concentration sensor. For example, the second amplitude may not be changed in accordance with the responsiveness of the downstream oxygen concentration sensor, and the first amplitude may be changed in accordance with the responsiveness of the downstream oxygen concentration sensor. When the cycle or amplitude of increase and decrease of the fuel amount supplied in the catalyst deterioration diagnosis period is changed in accordance with the responsiveness of the downstream oxygen concentration sensor, the cycle or amplitude may be shortened or decreased stepwise or gradually so that the cycle is shortened or the amplitude is decreased as the responsiveness of the downstream oxygen concentration sensor is increased.

### <Definition of Exhaust Passage Member>

In the present teaching and the embodiments, an exhaust passage member indicates a member such as a wall forming an exhaust path. The exhaust path indicates a space through which exhaust gas passes. The exhaust passage member is connected to at least one combustion chamber. The exhaust passage member may include a muffler. An upstream oxygen concentration sensor provided in the exhaust passage member may be provided in or outside an engine. A catalyst and a downstream oxygen concentration sensor provided at the exhaust passage member are provided outside the engine. The catalyst and the downstream oxygen concentration sensor may be provided in the muffler in the exhaust passage member.

### <Other Definitions>

In the claims, when the number of a constituent feature is not clearly specified and the constituent feature is expressed in a singular form in English, the number of the constituent feature may be more than one in the present teaching. In the present teaching, the number of the constituent features may be only one.

In the present teaching and the embodiments, terms "including", "comprising", "having", and derivatives thereof are used to encompass not only listed items and equivalents thereof but also additional items.

In the present teaching and the embodiments, the terms "mounted", "connected", "coupled", and "supported" are used in broad sense. Specifically, not only direct attachment, connection, coupling, and support but also indirect attachment, connection, coupling, and support are included. Further, connected and coupled are not limited to physical or mechanical connections and couplings. They also include direct or indirect electrical connections and couplings.

Unless defined otherwise, all terms (including technical and scientific terms) used herein have the same meaning as commonly understood by one of ordinary skill in the art to which the present teaching belongs. Terms such as those defined in commonly used dictionaries are to be interpreted as having meaning that is consistent with their meaning in the context of the relevant art and the present disclosure, and are not to be interpreted in an idealized or excessively formal sense.

As used herein, the term "preferred" is non-exclusive. The term "preferable" means "preferable but not limited to". In this specification, an arrangement which is "preferable" exerts at least the above-described effects of the arrangement of claim 1. In this specification, the term "may" is non-exclusive. The term "may" indicate "may but not must". In this specification, an arrangement which is explained by using the term "may" exerts at least the above-described effects of the arrangement of claim 1.

In the present teaching, the above-described preferable configurations are not limited to be combined with each other. Before describing embodiments of the present teaching in detail, it is to be understood that the present teaching is not limited to the details of construction and arrangement of the components set forth in the following description or illustrated in the drawings. The present teaching is also applicable to embodiments other than the embodiments described later. The present teaching may be implemented as an embodiment other than the below-described embodiment. Furthermore, the present teaching may be implemented by suitably combining below-described embodiments and modifications.

### <Confirmation of Execution of Fuel Amount Variation Control by Controller of Present Teaching>

By using a simulator provided between a controller and a downstream oxygen concentration sensor of a straddled vehicle, it is possible to confirm whether fuel amount variation control is being performed in at least part of a catalyst deterioration diagnosis period by a controller recited in the claims of the present teaching. To be more specific, in the period in which the state of deterioration of the catalyst is diagnosed, a signal is input to the controller from the downstream oxygen concentration sensor in which the responsiveness has been pseudo-changed. The cycle and amplitude of increase and decrease of a fuel amount supplied to at least one combustion chamber in this period are measured. With this, it is possible to confirm whether the fuel amount is controlled so that (1) a first cycle that is a cycle of increase and decrease of the fuel amount when the responsiveness of the downstream oxygen concentration sensor is high is shorter than a second cycle that is a cycle of increase and decrease of the fuel amount when the responsiveness of the downstream oxygen concentration sensor is low and/or (2) a first amplitude that is an amplitude of increase and decrease of the fuel amount when the responsiveness of the downstream oxygen concentration sensor is high is smaller than a second amplitude that is an amplitude of increase and decrease of the fuel amount when the responsiveness of the downstream oxygen concentration sensor is low.

### [Advantageous Effects]

The present teaching relates to a straddled vehicle in which a state of deterioration of a catalyst is diagnosed while the vehicle is running, and maintains or improves the accuracy and frequency of diagnosis of the state of deterioration of the catalyst and improves the drivability of the straddled vehicle when the vehicle is running.

### [Brief Description of Drawings]

FIG. 1 is a schematic representation of a straddled vehicle of First Embodiment.
FIG. 2 is a schematic diagram of an engine unit of the straddled vehicle of First Embodiment.
FIG. 3 is a control block diagram of the straddled vehicle of First Embodiment.
FIG. 4 is a graph showing the relationship between a fuel amount (correction amount) and time.
FIG. 5 is a graph showing responsiveness data regarding responsiveness of a downstream oxygen concentration sensor when fuel cut control is executed.
FIG. 6 is a flowchart of the steps of catalyst deterioration diagnosis performed by a controller.
FIG. 7(a) and FIG. 7(b) are graphs showing examples of the relationship between a signal from the upstream oxygen concentration sensor and a signal from the downstream oxygen concentration sensor in accordance with the state of deterioration of a catalyst. FIG. 7(a) shows a case where the catalyst is in a normal state, whereas FIG. 7(b) shows a case where the catalyst is in a deteriorated state.
FIG. 8 is a map showing an example of an association between responsiveness and fuel amount.
FIG. 9 shows the relationship between a correction amount added or subtracted to or from a basic fuel amount and an output value of an oxygen concentration sensor.
FIG. 10 is a map showing an example of an association between responsiveness and fuel amount of Fourth Embodiment.
FIG. **11** is a schematic diagram of an engine of a straddled vehicle of Fifth Embodiment.

### [Description of Embodiments]

### <Straddled Vehicle of First Embodiment>

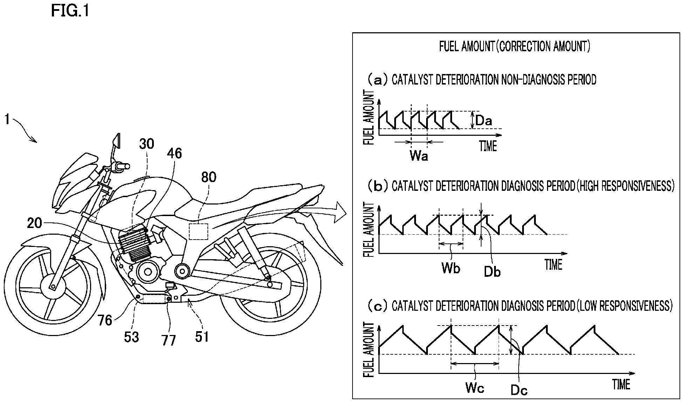

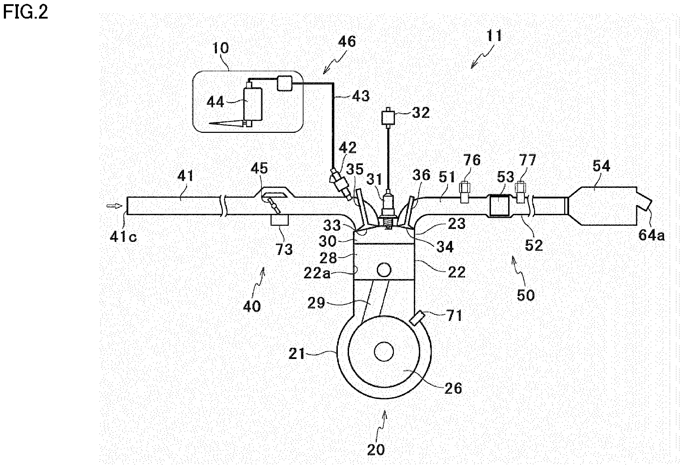

A straddled vehicle 1 of First Embodiment of the present teaching will be described with reference to FIG. 1 and FIG. 2.

As shown in FIG. 1, the straddled vehicle 1 includes an engine 20, an exhaust passage member 51, a catalyst 53, an upstream oxygen concentration sensor 76, a downstream oxygen concentration sensor 77, a fuel supplier 46, and a controller 80. The engine 20 includes at least one combustion chamber 30. The fuel supplier 46 is configured to supply fuel to the at least one combustion chamber 30. Exhaust gas exhausted from the at least one combustion chamber 30 passes the exhaust passage member 51. The catalyst 53 is disposed in the exhaust passage member 51. The upstream oxygen concentration sensor 76 is provided on the upstream of the catalyst 53 in the flow direction of the exhaust gas in the exhaust passage member 51 and is configured to detect the oxygen concentration in the exhaust gas. The downstream oxygen concentration sensor 77 is provided on the downstream of the catalyst 53 in the flow direction of the exhaust gas in the exhaust passage member 51 and is configured to detect the oxygen concentration in the exhaust gas.

The controller 80 is configured to control the fuel supplier 46 in at least part of a catalyst deterioration diagnosis period in which the state of deterioration of the catalyst is diagnosed and at least part of a catalyst deterioration non-diagnosis period in which the state of deterioration of the catalyst is not diagnosed. In at least part of the catalyst deterioration diagnosis period and at least part of the catalyst deterioration non-diagnosis period, the controller 80 performs fuel amount variation control of increasing and decreasing a fuel amount supplied to the at least one combustion chamber 30 by controlling the fuel supplier 46. Based on a signal sent from the downstream oxygen concentration sensor 77 during the catalyst deterioration diagnosis period, the controller 80 diagnoses the state of deterioration of the catalyst 53. The controller 80 diagnoses the state of deterioration of the catalyst 53 while the straddled vehicle 1 is running at vehicle speed higher than 0.

In at least part of the catalyst deterioration diagnosis period, the controller 80 performs the fuel amount variation control based on the responsiveness of the downstream oxygen concentration sensor 77 so that the following conditions (1) and/or (2) are/is satisfied. The controller 80 performs the fuel amount variation control so that (1) a first cycle that is a cycle of increase and decrease of the fuel amount when the responsiveness of the downstream oxygen concentration sensor 77 is high is shorter than a second cycle that is a cycle of increase and decrease of the fuel amount when the responsiveness of the downstream oxygen concentration sensor 77 is low. The controller 80 performs the fuel amount variation control so that (2) a first amplitude that is an amplitude of increase and decrease of the fuel amount when the responsiveness of the downstream oxygen concentration sensor 77 is high is smaller than a second amplitude that is an amplitude of increase and decrease of the fuel amount when the responsiveness of the downstream oxygen concentration sensor 77 is low. In at least part of the catalyst deterioration diagnosis period, the controller 80 suppresses the cycle and/or amplitude of increase and decrease of the fuel amount while the straddled vehicle 1 is running, as compared to a case if the fuel amount variation control is performed so that a cycle and amplitude of increase and decrease of the fuel amount are identical with the second cycle and the second amplitude irrespective of the responsiveness of the downstream oxygen concentration sensor. The controller 80 suppresses the cycle and/or amplitude of increase and decrease of the fuel amount while the straddled vehicle 1 is running in at least part of the catalyst deterioration diagnosis period. The controller 80 suppresses the cycle and/or amplitude of increase and decrease of the fuel amount while the straddled vehicle 1 is running in the case where the responsiveness of the downstream oxygen concentration sensor 77 is high, as compared to the cycle and/or amplitude of increase and decrease of the fuel amount while the straddled vehicle 1 is running in the case where the responsiveness of the downstream oxygen concentration sensor 77 is low.

An example of an engine unit **11** including the engine 20 of the straddled vehicle 1 of First Embodiment will be described with reference to FIG. 2. As shown in FIG. 2, the engine unit 11 includes the engine 20, an intake unit 40, and an exhaust unit 50. The engine unit **11** is, for example, an engine unit having a natural air-cooled engine 20. The engine 20 of the straddled vehicle 1 of the present teaching may be a forced air-cooled engine, a water-cooled engine, or an oil-cooled engine. The engine unit 11 may be an engine unit having a 4-stroke engine. The 4-stroke engine is an engine that repeats an intake process, a compression process, a combustion process (expansion stroke), and an exhaust process.

The engine 20 includes a crankcase 21, a cylinder body 22, and a cylinder head 23. The cylinder body 22 is attached to an upper end portion of the crankcase 21. The cylinder head 23 is attached to an upper end portion of the cylinder body 22.

The crankcase 21 accommodates members such as a crankshaft 26. The crankcase 21 is provided with an engine rotation speed sensor 71. The engine rotation speed sensor 71 detects the rotation speed of the crankshaft 26, i.e., the engine rotation speed. The engine rotation speed indicates the number of rotations of the crankshaft 26 per unit time.

A cylinder hole 22a is formed in the cylinder body 22. In the cylinder hole 22a, a piston 28 is slidably housed. The piston 28 is connected to the crankshaft 26 by a connecting rod 29.

The cylinder head 23, the cylinder hole 22a, and the piston 28 form at least one combustion chamber 30. In each of the at least one combustion chamber 30, a leading end portion of an ignition plug 31 is provided. The tip portion of the ignition plug 31 generates a spark discharge. By this spark discharge, air-fuel mixture in the combustion chamber 30 is ignited. The ignition plug 31 is connected to an ignition coil 32. The ignition coil 32 stores electric power in order to generate spark discharge of the ignition plug 31.

In the combustion chamber 30, an intake port 33 and an exhaust port 34 are formed. The intake port 33 is opened and closed by an intake valve 35. The exhaust port 34 is opened and closed by an exhaust valve 36. The intake valve 35 and the exhaust valve 36 are driven and opened and closed by a valve driving device (not illustrated) housed in the cylinder head 23. The valve driving device operates in conjunction with the crankshaft 26.

The engine unit 11 includes an intake passage member 41 which connects the intake port 33 with an atmosphere suction port 41c facing the atmosphere. The atmosphere suction port 41a sucks air from the atmosphere. The air sucked through the atmosphere suction port 41a flows in the intake passage member 41 toward the intake port 33. A part of the intake passage member 41 is formed at the engine 20. The remaining part of the intake passage member 41 is formed at the intake unit 40. The intake unit 40 includes an intake pipe connected to the engine 20. Furthermore, the intake unit 40 includes an injector 42 and a throttle valve 45.

The engine unit 11 includes the exhaust passage member 51 which connects the exhaust port 34 with an atmosphere discharge port 64a facing the atmosphere. The combustion gas generated in the combustion chamber 30 is discharged to the exhaust passage member 51 through the exhaust port 34. The combustion gas discharged from the combustion chamber 30 is referred to as exhaust gas. The exhaust gas flows in the exhaust passage member 51 toward the atmosphere discharge port 64a. A part of the exhaust passage member 51 is formed at the engine 20. The remaining part of the exhaust passage member 51 is formed at the exhaust unit 50. The exhaust unit 50 includes an exhaust pipe 52 connected to the engine 20. Furthermore, the exhaust unit 50 includes a catalyst 53 and a muffler 54. The muffler 54 is a device for reducing noise generated by exhaust gas.

The injector 42 is provided in the intake passage member 41. The injector 42 is configured to inject fuel to air sucked through the atmosphere suction port 41a. To be more specific, the injector 42 injects fuel to the air in the intake passage member 41. The injector 42 is connected to a fuel tank 10 through a fuel hose 43. A fuel pump 44 is disposed inside the fuel tank 10. The fuel pump 44 pressure-feeds the fuel in the fuel tank 10 to the fuel hose 43. A combination of the injector 42 and the fuel pump 44 is equivalent to the fuel supplier of the present teaching.

The throttle valve 45 is provided in the intake passage member 41. The throttle valve 45 is provided upstream of the injector 42. The throttle valve 45 is connected to an accelerator grip (not illustrated) through a throttle wire. The opening degree of the throttle valve 45 is changed as the rider rotationally operates the accelerator grip. The engine unit **11** includes a throttle opening degree sensor (throttle position sensor) 73 which is configured to detect the opening degree of the throttle valve 45. Hereinafter, the opening degree of the throttle valve 45 will be referred to as a throttle opening degree. The throttle opening degree sensor 73 is configured to detect the position of the throttle valve 45 and output a signal indicating the opening degree of the throttle valve 45. The throttle valve 45 may be an electronic throttle valve opened and closed by electronic control. In this case, the throttle opening degree sensor 73 may output a signal representing a throttle opening degree, based on an electronic control signal.

The catalyst 53 is, for example, a three way catalyst.

The upstream oxygen concentration sensor 76 is configured to output a signal corresponding to the oxygen concentration in the exhaust gas. The upstream oxygen concentration sensor 76 outputs a signal having a large value when the air-fuel ratio of air-fuel mixture is in a rich state, and outputs a signal having a small value when the air-fuel ratio of the air-fuel mixture is in a lean state.

The downstream oxygen concentration sensor 77 is configured to output a signal corresponding to the oxygen concentration in the exhaust gas. The downstream oxygen concentration sensor 77 outputs a signal having a large value when the catalyst 53 is not provided in the exhaust passage member 51 and the air-fuel ratio of the air-fuel mixture is in the rich state, and outputs a signal having a small value when the catalyst 53 is not provided in the exhaust passage member 51 and the air-fuel ratio of the air-fuel mixture is in the lean state.

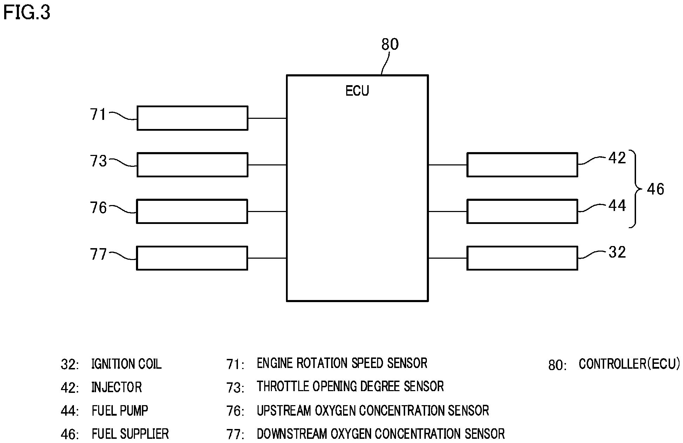

An example of the controller 80 of the straddled vehicle 1 of First Embodiment will be described with reference to FIG. 3. As shown in FIG. 3, the engine unit 11 is arranged so that the operation of the engine unit 11 is controlled by the controller 80. The controller 80 is, for example, an ECU (Electronic Control Unit). The controller 80 is connected to sensors such as the engine rotation speed sensor 71, the throttle opening degree sensor 73, the upstream oxygen concentration sensor 76, and the downstream oxygen concentration sensor 77. The controller 80 receives signals from the sensors. For example, the controller 80 receives signals from the upstream oxygen concentration sensor 76 and the downstream oxygen concentration sensor 77. The controller 80 is connected to members such as the ignition coil 32, the injector 42, and the fuel pump 44.

The controller 80 is formed of a CPU, a ROM, a RAM, etc. The CPU executes the information process based on programs and various data stored in the ROM or the RAM. The controller 80 performs fuel supply amount control and ignition timing control. The above-described fuel amount variation control is encompassed in the fuel supply amount control. In addition to the above, the controller 80 executes a catalyst deterioration diagnosis process. In the fuel supply amount control, the controller 80 controls the injector 42 and the fuel pump 44. In the ignition timing control, the controller 80 controls the ignition coil 32.

The following will describe the fuel supply amount control. By controlling the fuel supplier 46, the controller 80 controls the fuel amount supplied to the at least one combustion chamber 30. By controlling the fuel injection time of the injector 42, the controller 80 controls the fuel amount supplied to the at least one combustion chamber 30.

The following will describe the fuel amount variation control of the fuel supply amount control. The controller 80 performs the fuel amount variation control by performing feedback control based on a signal from the upstream oxygen concentration sensor 76. The controller 80 determines a basic fuel amount based on signals from sensors such as the engine rotation speed sensor 71 and the throttle opening degree sensor 73. The controller 80 determines a correction amount based on a signal from the upstream oxygen concentration sensor 76. The fuel amount is calculated by adding or subtracting the correction amount to or from the basic fuel amount. The controller 80 changes the air-fuel ratio of the air-fuel mixture supplied to the at least one combustion chamber 30 by performing the fuel amount variation control of increasing and decreasing the fuel amount supplied to the at least one combustion chamber 30.

In at least part of the catalyst deterioration non-diagnosis period, the controller 80 performs the feedback control (fuel amount variation control) in order to maintain the air-fuel ratio of the air-fuel mixture at a target air-fuel ratio. In the feedback control performed in the catalyst deterioration non-diagnosis period, the cycle and amplitude of increase and decrease of the correction amount are not changed in accordance with the responsiveness of the downstream oxygen concentration sensor 77. In at least part of the catalyst deterioration diagnosis period, the controller 80 performs the feedback control (fuel amount variation control) so that the cycle or amplitude of increase and decrease of the fuel amount corresponds to the responsiveness of the downstream oxygen concentration sensor 77. The basic fuel amount in the catalyst deterioration non-diagnosis period may be identical with or different from the basic fuel amount in the catalyst deterioration diagnosis period.

FIG. 1(a) to FIG. 1(c) show increase and decrease of the fuel amount supplied to the at least one combustion chamber 30 when the feedback control (fuel amount variation control) is being performed. FIG. 1(a) shows an example of the cycle and amplitude of increase and decrease of the fuel amount in the catalyst deterioration non-diagnosis period. FIG. 1(b) shows an example of the cycle and amplitude of increase and decrease of the fuel amount when the responsiveness of the downstream oxygen concentration sensor 77 is high in the catalyst deterioration diagnosis period. FIG. 1(c) shows an example of the cycle and amplitude of increase and decrease of the fuel amount when the responsiveness of the downstream oxygen concentration sensor 77 is low in the catalyst deterioration diagnosis period. Each of a cycle Wb of increase and decrease of the fuel amount shown in FIG. 1(b) and a cycle Wc of increase and decrease of the fuel amount shown in FIG. 1(c) is longer than a cycle Wa of increase and decrease of the fuel amount shown in FIG. 1(a). Each of the cycle Wb and an amplitude Db of increase and decrease of the fuel amount shown in FIG. 1(b) and an amplitude Dc of increase and decrease of the fuel amount shown in FIG. 1(c) is larger than an amplitude Da of increase and decrease of the fuel amount shown in FIG. 1(a). The cycle Wb of increase and decrease of the fuel amount shown in FIG. 1(b) is smaller than the cycle Wc of increase and decrease of the fuel amount shown in FIG. 1(c). The amplitude Db of increase and decrease of the fuel amount shown in FIG. 1(b) is shorter than the amplitude Dc of increase and decrease of the fuel amount shown in FIG. 1(c). When the responsiveness of the downstream oxygen concentration sensor 77 is low, the controller 80 may perform preparation for the catalyst deterioration diagnosis by performing the fuel amount variation control in the cycle Wb and amplitude Db of increase and decrease of the fuel amount variation control shown in FIG. 1(b) in the catalyst deterioration non-diagnosis period immediately before the catalyst deterioration diagnosis period, and then may perform, in the catalyst deterioration diagnosis period, the fuel amount variation control so that the cycle amplitude shift to the cycle Wc and amplitude Dc of increase and decrease of the fuel amount shown in FIG. 1(c), which is based on the responsiveness of the downstream oxygen concentration sensor 77.

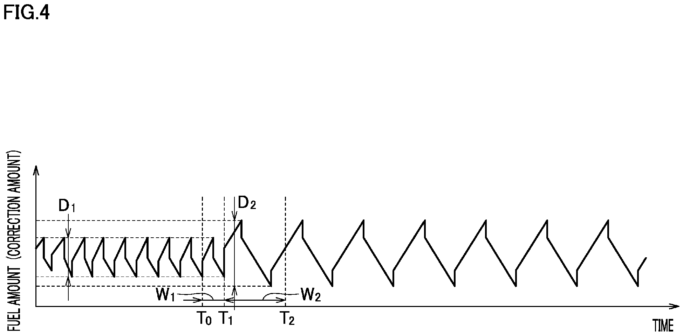

The following will describe an example of the feedback control (fuel amount variation control) performed by the controller 80 of the straddled vehicle 1 of First Embodiment, with reference to FIG. 4. As shown in FIG. 4, during the catalyst deterioration non-diagnosis period (before T1) that is different from the catalyst deterioration diagnosis period (on and after T1), the controller 80 performs the fuel amount variation control so that the cycle of increase and decrease of the fuel amount is W1 (T0 to T1) and the amplitude of increase and decrease of the fuel amount is D1. During the catalyst deterioration diagnosis period (T1 to Tn), the controller 80 performs the feedback control (fuel amount variation control) so that the cycle of increase and decrease of the fuel amount is W2 (T1 to T2) and the amplitude of increase and decrease of the fuel amount is D2. The cycle W2 and amplitude D2 of increase and decrease of the fuel amount in the catalyst deterioration diagnosis period (T1 to Tn) are changed in accordance with the responsiveness of the downstream oxygen concentration sensor 77.

The following will describe the catalyst deterioration diagnosis process. Based on a signal sent from the downstream oxygen concentration sensor 77 during not the catalyst deterioration non-diagnosis period but the catalyst deterioration diagnosis period, the controller 80 diagnoses the state of deterioration of the catalyst 53.

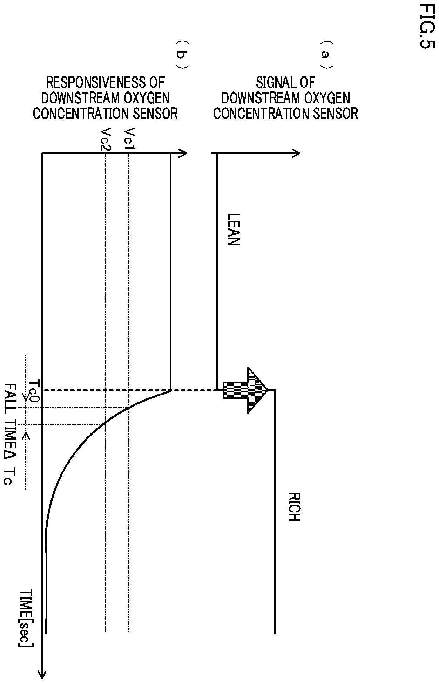

In the catalyst deterioration diagnosis process, the controller 80 acquires the responsiveness of the downstream oxygen concentration sensor 77. The controller 80 acquires and stores responsiveness data related to the responsiveness of the downstream oxygen concentration sensor 77 based on a signal from the downstream oxygen concentration sensor 77. The responsiveness data related to the responsiveness of the downstream oxygen concentration sensor 77 is, for example, a fall time of the downstream oxygen concentration sensor 77 when fuel cut control of temporarily stopping the supply of the fuel to the at least one combustion chamber 30 is performed in the catalyst deterioration diagnosis period or the catalyst deterioration non-diagnosis period. To be more specific, for example, as shown in FIG. 5(a), the controller 80 performs control of arranging the fuel amount to be zero for the controller 80 at a time Tc0 at which the signal from the downstream oxygen concentration sensor 77 is high. As shown in FIG. 5(b), the controller 80 acquires a fall time ΔTc in which the signal from the downstream oxygen concentration sensor 77 changes from Vc1 to Vc2, after the time Tc0 at which the fuel cut control is performed.

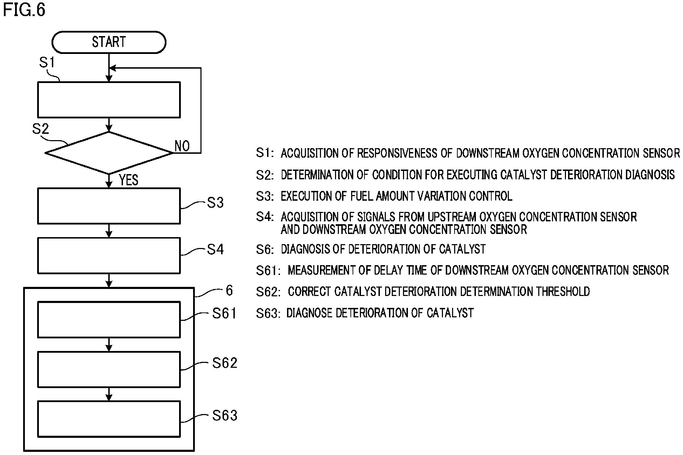

The steps of the catalyst deterioration diagnosis process performed by the controller 80 will be described with reference to FIG. 6.

The controller 80 acquires and stores the responsiveness of the downstream oxygen concentration sensor 77 (step S1). The controller 80 determines whether a condition for executing the catalyst deterioration diagnosis is satisfied (step S2). The condition for executing the catalyst deterioration diagnosis is, for example, a condition in which the catalyst 53 is warmed and in an active state. When it is determined that the condition for executing the catalyst deterioration diagnosis is satisfied (YES in the step S2), the controller 80 performs, in at least part of the catalyst deterioration diagnosis period, the fuel amount variation control based on the responsiveness data related to the responsiveness of the downstream oxygen concentration sensor 77 stored in the step S1 (step S3). To be more specific, the controller 80 sets the basic fuel amount during the catalyst deterioration diagnosis period based on a signal from the upstream oxygen concentration sensor 76. In the catalyst deterioration diagnosis period, the controller 80 performs correction that is different from the correction of the basic fuel amount in the catalyst deterioration non-diagnosis period. In other words, in at least part of the catalyst deterioration diagnosis period, the controller 80 determines the correction amount with which the basic fuel amount is corrected, based on the responsiveness data related to the responsiveness of the downstream oxygen concentration sensor 77.

The controller 80 acquires a signal from the upstream oxygen concentration sensor 76 and a signal from the downstream oxygen concentration sensor 77, which are detected during the catalyst deterioration diagnosis period (step S4). Based on the signal sent from the downstream oxygen concentration sensor 77 and detected during the catalyst deterioration diagnosis period, the controller 80 diagnoses the state of deterioration of the catalyst (step S6).

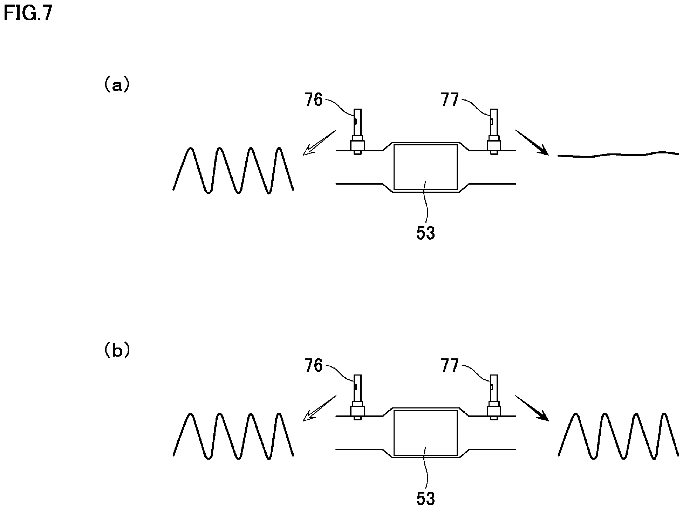

Now, the following will describe a signal from the upstream oxygen concentration sensor 76 and a signal from the downstream oxygen concentration sensor 77 during the catalyst deterioration diagnosis period, in each of cases in which the state of deterioration of the catalyst 53 is different. FIG. 7(a) and FIG. 7(b) show a signal from the upstream oxygen concentration sensor 76 in a normal state and a signal from the downstream oxygen concentration sensor 77 in a normal state, in a case where the fuel amount supplied to the at least one combustion chamber 30 increases and decreases. In FIG. 7(a) and FIG. 7(b), the fuel amount supplied to the at least one combustion chamber 30 increases and decreases in such a way that the air-fuel ratio of the air-fuel mixture supplied to the at least one combustion chamber 30 is repeatedly switched between a rich state and a lean state. When the air-fuel ratio is in the rich state, fuel is excessive as compared to a target air-fuel ratio. In other words, in the rich state, an amount of oxygen is small relative to the target air-fuel ratio. In the lean state, air is excessive relative to the target air-fuel ratio. In other words, in the lean state, an amount of oxygen is excessive relative to the target air-fuel ratio. On this account, a signal from the upstream oxygen concentration sensor 76 that is on the upstream of the catalyst 53 changes in a cycle identical with the cycle of increase and decrease of the fuel amount.

The catalyst 53 shown in FIG. 7(a) is normal whereas the catalyst 53 shown in FIG. 7(b) is deteriorated. As shown in FIG. 7(a) and FIG. 7(b), the signal from the downstream oxygen concentration sensor 77 is different between a case where the catalyst 53 is normal and a case where the catalyst 53 is deteriorated. When the exhaust gas generated from the air-fuel mixture in the lean state passes through the normal catalyst 53, oxygen is occluded by the catalyst 53. Meanwhile, when the exhaust gas generated from the air-fuel mixture in the rich state passes through the normal catalyst 53, oxygen occluded by the catalyst 53 is discharged. On this account, when the catalyst 53 is normal, the signal from the downstream oxygen concentration sensor 77 is more or less constant even if the fuel amount supplied to the at least one combustion chamber 30 is increased and decreased. When the catalyst 53 is deteriorated, the purification performance of the catalyst 53 is lowered and an amount of occluded oxygen is decreased. For this reason, when exhaust gas generated from the air-fuel mixture in the lean state passes through the deteriorated catalyst 53, the catalyst 53 cannot sufficiently occlude oxygen. Meanwhile, when exhaust gas generated from the air-fuel mixture in the rich state passes through the deteriorated catalyst 53, the catalyst 53 cannot sufficiently discharge oxygen. On this account, when the catalyst 53 is deteriorated, the signal from the downstream oxygen concentration sensor 77 changes in a cycle identical with the cycle of increase and decrease of the fuel amount, no matter whether the downstream oxygen concentration sensor 77 is an O2 sensor or a linear A/F sensor.

The details of the catalyst deterioration diagnosis process based on a signal from the downstream oxygen concentration sensor 77 will be given with reference to FIG. 6.

The controller 80 acquires a catalyst deterioration determination value based on a signal from the downstream oxygen concentration sensor 77, which is output while the fuel amount variation control is being performed in the catalyst deterioration diagnosis period (step S61). The controller 80 measures response delay times of the downstream oxygen concentration sensor 77 at plural time points in the catalyst deterioration diagnosis period, and calculates an average value of the response delay times. A response delay time of the downstream oxygen concentration sensor 77 is a delay of a change of a signal from the downstream oxygen concentration sensor 77 relative to an increase or a decrease of the fuel amount supplied to the at least one combustion chamber 30. In the present embodiment, the average value of the response delay times of the downstream oxygen concentration sensor is regarded as a catalyst deterioration determination value of the downstream oxygen concentration sensor 77.

The controller 80 corrects a catalyst deterioration determination threshold based on the responsiveness of the downstream oxygen concentration sensor 77 acquired in the step S1 (step S62). The controller 80 may correct the catalyst deterioration determination value based on the responsiveness of the downstream oxygen concentration sensor 77 acquired in the step S1. The catalyst deterioration determination threshold is a value to be compared with the catalyst deterioration determination value. The catalyst deterioration determination threshold before correction or the catalyst deterioration determination threshold which is not to be corrected is set in advance and stored in the controller 80. The catalyst deterioration determination threshold before correction or the catalyst deterioration determination threshold which is not to be corrected is set for each straddled vehicle 1 in consideration of the initial purification performance of the catalyst 53. Depending on the responsiveness of the downstream oxygen concentration sensor 77, neither the catalyst deterioration determination threshold nor the catalyst deterioration determination value may be corrected.

After the step S62, the controller 80 compares the catalyst deterioration determination threshold with the catalyst deterioration determination value so as to diagnose the state of deterioration of the catalyst 53 (step S62). When the catalyst deterioration determination value is smaller than the catalyst deterioration determination threshold, the controller 80 diagnoses that the catalyst 53 is deteriorated. When the catalyst deterioration determination threshold has been corrected in the step S62, the controller 80 compares the uncorrected catalyst deterioration determination value with the corrected catalyst deterioration determination threshold so as to diagnose the state of deterioration of the catalyst 53. When the catalyst deterioration determination threshold has been corrected in the step S62, the controller 80 compares the corrected catalyst deterioration determination value with the catalyst deterioration determination threshold set in advance so as to diagnose the state of deterioration of the catalyst 53.

According to the arrangement above, in the straddled vehicle 1 in which the state of deterioration of the catalyst 53 is diagnosed based on a signal from the downstream oxygen concentration sensor 77 while the vehicle is running, increase in size of the catalyst 53 is suppressed and the drivability of the running straddled vehicle 1 is improved, while the accuracy and frequency of the diagnosis of the state of deterioration of the catalyst 53 are maintained or improved.

### <Straddled Vehicle of Second Embodiment>

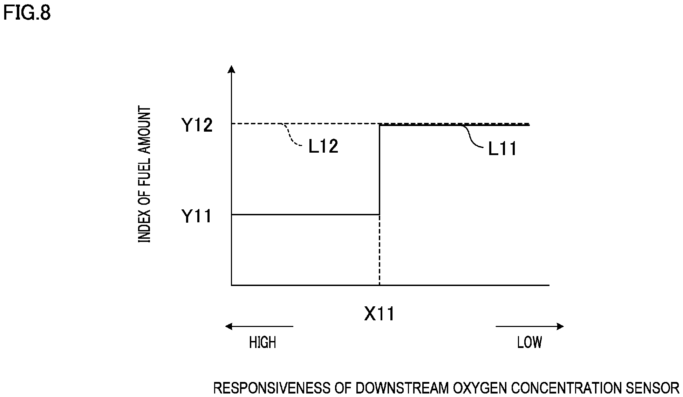

A straddled vehicle 1 of Second Embodiment of the present teaching will be described with reference to FIG. 8 and FIG. 9. The straddled vehicle 1 of Second Embodiment includes the following arrangements, in addition to those of First Embodiment.

The controller 80 stores an association between responsiveness and fuel amount in advance. This associates the responsiveness of the downstream oxygen concentration sensor 77 with the fuel amount supplied during the catalyst deterioration diagnosis period. The association between responsiveness and fuel amount is set so that a first cycle that is a cycle of increase and decrease of the fuel amount when the responsiveness of the downstream oxygen concentration sensor 77 is high is shorter than a second cycle that is a cycle of increase and decrease of the fuel amount when the responsiveness of the downstream oxygen concentration sensor 77 is low and/or a first amplitude that is an amplitude of increase and decrease of the fuel amount when the responsiveness of the downstream oxygen concentration sensor 77 is high is smaller than a second amplitude that is an amplitude of increase and decrease of the fuel amount when the responsiveness of the downstream oxygen concentration sensor 77 is low.

In at least part of the catalyst deterioration diagnosis period, the controller 80 performs fuel amount variation control (1) and/or fuel amount variation control (2) described below, based on the association between responsiveness and fuel amount. The controller 80 performs the fuel amount variation control so that (1) a first cycle that is a cycle of increase and decrease of the fuel amount when the responsiveness of the downstream oxygen concentration sensor is high is shorter than a second cycle that is a cycle of increase and decrease of the fuel amount when the responsiveness of the downstream oxygen concentration sensor is low. The controller 80 performs the fuel amount variation control so that (2) a second amplitude that is an amplitude of increase and decrease of the fuel amount when the responsiveness of the downstream oxygen concentration sensor is high is smaller than a second amplitude that is an amplitude of increase and decrease of the fuel amount when the responsiveness of the downstream oxygen concentration sensor is low.

For example, the controller 80 performs the fuel amount variation control based on a map of the association between responsiveness and fuel amount shown in FIG. 8. A line L11 in FIG. 8 indicates the map of the association between responsiveness and fuel amount. A linear line L12 in FIG. 8 indicates a comparative example. In the map of the association between responsiveness and fuel amount, the responsiveness of the downstream oxygen concentration sensor 77 is associated with an index of the fuel amount during the catalyst deterioration diagnosis period. The relationship between the responsiveness of the downstream oxygen concentration sensor 77 and the index of the fuel amount in the catalyst deterioration diagnosis period in the map of the association between responsiveness and fuel amount represents the relationship between the responsiveness of the downstream oxygen concentration sensor 77 and the cycle and/or cycle of increase and decrease of the fuel amount. The map of the association between responsiveness and fuel amount is stored in the controller 80 in advance. The index of the fuel amount is, for example, a reversal waiting time Ws (see FIG. 9). The index of the fuel amount may be a value associated with at least one of a reversal waiting time Ws, a correction amount maintenance time ω (see FIG. 9), a correction variable Δ (see FIG. 9), or a step variable Δs (see FIG. 9). In at least part of the catalyst deterioration diagnosis period, the controller 80 performs the fuel amount variation control of increasing and decreasing the fuel amount supplied to the at least one combustion chamber based on the responsiveness of the downstream oxygen concentration sensor 77 and the map of the association between responsiveness and fuel amount. The controller 80 performs the control in such a way that the cycle and/or amplitude of increase and decrease of the fuel amount in the catalyst deterioration diagnosis period is increased when the index of the fuel amount in the catalyst deterioration diagnosis period is large. The controller 80 performs the control in such a way that the cycle and/or amplitude of increase and decrease of the fuel amount in the catalyst deterioration diagnosis period is shortened and/or decreased when the index of the fuel amount in the catalyst deterioration diagnosis period is small.

As indicated by the line L11 in the map of the association between responsiveness and fuel amount, a case where the responsiveness of the downstream oxygen concentration sensor 77 is lower than X11 indicates a case where the responsiveness of the downstream oxygen concentration sensor 77 is high. A case where the responsiveness of the downstream oxygen concentration sensor 77 exceeds X11 indicates a case where the responsiveness of the downstream oxygen concentration sensor 77 is low. When the responsiveness of the downstream oxygen concentration sensor 77 is higher than X11, the index of the fuel amount in the catalyst deterioration diagnosis period is constant (Y11) irrespective of the responsiveness of the downstream oxygen concentration sensor 77. When the responsiveness of the downstream oxygen concentration sensor 77 is lower than X11, the index of the fuel amount in the catalyst deterioration diagnosis period is constant (Y12) irrespective of the responsiveness of the downstream oxygen concentration sensor 77. The index Y11 of the fuel amount in the catalyst deterioration diagnosis period when the responsiveness of the downstream oxygen concentration sensor 77 is higher than Y11 is smaller than the index Y12 of the fuel amount in the catalyst deterioration diagnosis period when the responsiveness of the downstream oxygen concentration sensor 77 is lower than X11.

When the fuel amount variation control is performed in at least part of the catalyst deterioration diagnosis period by using the map of the association between responsiveness and fuel amount shown in FIG. 8, the increase and decrease of the fuel amount are as follows. When the responsiveness of the downstream oxygen concentration sensor 77 is higher than X11, the cycle and amplitude of increase and decrease of the fuel amount in the catalyst deterioration diagnosis period are substantially constant irrespective of the responsiveness of the downstream oxygen concentration sensor 77. When the responsiveness of the downstream oxygen concentration sensor 77 is lower than X11, the cycle and amplitude of increase and decrease of the fuel amount in the catalyst deterioration diagnosis period are substantially constant irrespective of the responsiveness of the downstream oxygen concentration sensor 77, too. The cycle (first cycle) and/or amplitude (first amplitude) of increase and decrease of the fuel amount in the catalyst deterioration diagnosis period when the responsiveness of the downstream oxygen concentration sensor 77 is higher than X11 is smaller than the cycle (second cycle) and/or amplitude (second amplitude) of increase and decrease of the fuel amount in the catalyst deterioration diagnosis period when the responsiveness of the downstream oxygen concentration sensor 77 is lower than X11.

As indicated by a comparative example of the linear line L12 in FIG. 8, in known cases, the index (Y12) of the fuel amount in the catalyst deterioration diagnosis period is constant irrespective of the responsiveness of the downstream oxygen concentration sensor 77, and is larger than the index (Y11) of the fuel amount in the catalyst deterioration diagnosis period when the responsiveness of the downstream oxygen concentration sensor 77 is high in the line L11. In other words, in a known straddled vehicle such as the vehicle recited in Patent Literature 1, a controller performs fuel amount variation control in such a way that a cycle and amplitude of increase and decrease of a fuel amount in a catalyst deterioration diagnosis period are a long cycle and large amplitude that are stored in advance and shared between the vehicles.

### <Straddled Vehicle of Third Embodiment>

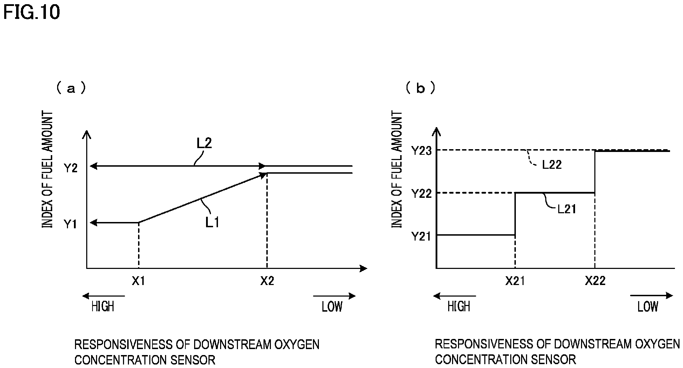

A straddled vehicle 1 of Third Embodiment of the present teaching will be described with reference to FIG. 10. A straddled vehicle 1 of Third Embodiment includes the following arrangements, in addition to those of First Embodiment and Second Embodiment.

In at least part of the catalyst deterioration diagnosis period, the controller 80 performs fuel amount variation control (1) and/or fuel amount variation control (2) described below, based on the responsiveness of the downstream oxygen concentration sensor 77. The controller 80 performs fuel amount variation control so that (1) a first cycle that is a cycle of increase and decrease of the fuel amount when the responsiveness of the downstream oxygen concentration sensor 77 is high is shorter than a third cycle that is a cycle of increase and decrease of the fuel amount when the responsiveness of the downstream oxygen concentration sensor 77 is moderate and the third cycle that is a cycle of increase and decrease of the fuel amount when the responsiveness of the downstream oxygen concentration sensor 77 is moderate is shorter than a second cycle that is a cycle of increase and decrease of the fuel amount when the responsiveness of the downstream oxygen concentration sensor 77 is low. The controller 80 performs fuel amount variation control so that (2) a first amplitude that is an amplitude of increase and decrease of the fuel amount when the responsiveness of the downstream oxygen concentration sensor is high is smaller than a third amplitude that is an amplitude of increase and decrease of the fuel amount when the responsiveness of the downstream oxygen concentration sensor 77 is moderate and the third amplitude that is an amplitude of increase and decrease of the fuel amount when the responsiveness of the downstream oxygen concentration sensor 77 is moderate is smaller than a second amplitude that is an amplitude of increase and decrease of the fuel amount when the responsiveness of the downstream oxygen concentration sensor 77 is low.

For example, the controller 80 performs the fuel amount variation control based on a map of the association between responsiveness and fuel amount shown in each of FIG. 10(a) and FIG. 10(b). Each of a line L1 in FIG. 10(a) and a line L21 in FIG. 10(b) indicates a map of the association between responsiveness and fuel amount. A linear line L2 in FIG. 10(a) and a linear line L22 in FIG. 10(b) are comparative examples. These maps of the association between responsiveness and fuel amount are stored in the controller 80 in advance. The maps of the association between responsiveness and fuel amount have been described above and are not detailed again.

As indicated by the line L1 in the map of the association between responsiveness and fuel amount shown in FIG. 10(a), a case where the responsiveness of the downstream oxygen concentration sensor 77 is lower than X1 indicates a case where the responsiveness of the downstream oxygen concentration sensor 77 is high. A case where the responsiveness of the downstream oxygen concentration sensor 77 exceeds X1 but is smaller than X2 indicates a case where the responsiveness of the downstream oxygen concentration sensor 77 is moderate. A case where the responsiveness of the downstream oxygen concentration sensor 77 exceeds X2 indicates a case where the responsiveness of the downstream oxygen concentration sensor 77 is low. When the responsiveness of the downstream oxygen concentration sensor 77 is higher than X1, the index of the fuel amount in the catalyst deterioration diagnosis period is constant (Y1) irrespective of the responsiveness of the downstream oxygen concentration sensor 77. When the responsiveness of the downstream oxygen concentration sensor 77 is lower than X1 and higher than X2, i.e., moderate, the index of the fuel amount in the catalyst deterioration diagnosis period gradually increases as the responsiveness of the downstream oxygen concentration sensor 77 is lowered (larger than Y1 and not larger than Y2). When the responsiveness of the downstream oxygen concentration sensor 77 is lower than X2, the index of the fuel amount in the catalyst deterioration diagnosis period is constant (Y2) irrespective of the responsiveness of the downstream oxygen concentration sensor 77. The index Y1 of the fuel amount in the catalyst deterioration diagnosis period when the responsiveness X of the downstream oxygen concentration sensor 77 is high is smaller than the index Y2 of the fuel amount in the catalyst deterioration diagnosis period when the responsiveness X of the downstream oxygen concentration sensor 77 is low. When the responsiveness of the downstream oxygen concentration sensor 77 is lower than X2, the controller 80 may terminate the catalyst deterioration diagnosis process with the assumption that the condition for executing the catalyst deterioration diagnosis is not satisfied.

When the fuel amount variation control is performed in at least part of the catalyst deterioration diagnosis period by using the map of the association between responsiveness and fuel amount shown in FIG. 10(a), the increase and decrease of the fuel amount are as follows. When the responsiveness of the downstream oxygen concentration sensor 77 is higher than X1 as described below, the cycle and amplitude of increase and decrease of the fuel amount in the catalyst deterioration diagnosis period are substantially constant irrespective of the responsiveness of the downstream oxygen concentration sensor 77. When the responsiveness of the downstream oxygen concentration sensor 77 is lower than X1 and higher than X2, i.e., moderate, the cycle (third cycle) and/or amplitude (third amplitude) of increase and decrease of the fuel amount in the catalyst deterioration diagnosis period gradually increases as the responsiveness of the downstream oxygen concentration sensor 77 is lowered. When the responsiveness of the downstream oxygen concentration sensor 77 is lower than X2 as described below, the cycle and amplitude of increase and decrease of the fuel amount in the catalyst deterioration diagnosis period are substantially constant irrespective of the responsiveness of the downstream oxygen concentration sensor 77. The cycle (first cycle) and/or amplitude (first amplitude) of increase and decrease of the fuel amount in the catalyst deterioration diagnosis period when the responsiveness of the downstream oxygen concentration sensor 77 is higher than X1 is smaller than the cycle (third cycle) and/or amplitude (third amplitude) of increase and decrease of the fuel amount in the catalyst deterioration diagnosis period when the responsiveness of the downstream oxygen concentration sensor 77 is moderate, i.e., lower than X1 and higher than X2. The cycle (third cycle) and/or amplitude (third amplitude) of increase and decrease of the fuel amount in the catalyst deterioration diagnosis period when the responsiveness of the downstream oxygen concentration sensor 77 is moderate, i.e., lower than X1 and higher than X2 is shorter than or smaller than the cycle (second cycle) and/or amplitude (second amplitude) of increase and decrease of the fuel amount in the catalyst deterioration diagnosis period when the responsiveness of the downstream oxygen concentration sensor 77 is lower than X1 and higher than X2.

As indicated by the line L21, in the map of the association between responsiveness and fuel amount shown in FIG. 10(b), a case where the responsiveness of the downstream oxygen concentration sensor 77 is lower than X21 indicates a case where the responsiveness of the downstream oxygen concentration sensor 77 is high. A case where the responsiveness of the downstream oxygen concentration sensor 77 exceeds X21 but is smaller than X22 indicates a case where the responsiveness of the downstream oxygen concentration sensor 77 is moderate. A case where the responsiveness of the downstream oxygen concentration sensor 77 exceeds X22 indicates a case where the responsiveness of the downstream oxygen concentration sensor 77 is low. When the responsiveness of the downstream oxygen concentration sensor 77 is higher than X21, the index of the fuel amount in the catalyst deterioration diagnosis period is constant (Y21) irrespective of the responsiveness of the downstream oxygen concentration sensor 77. When the responsiveness of the downstream oxygen concentration sensor 77 is moderate, i.e., lower than X21 and higher than X22, the index of the fuel amount in the catalyst deterioration diagnosis period is constant (Y22) irrespective of the responsiveness of the downstream oxygen concentration sensor 77. When the responsiveness of the downstream oxygen concentration sensor 77 is lower than X22, the index of the fuel amount in the catalyst deterioration diagnosis period is constant (Y23) irrespective of the responsiveness of the downstream oxygen concentration sensor 77. The index Y21 of the fuel amount in the catalyst deterioration diagnosis period when the responsiveness of the downstream oxygen concentration sensor 77 is higher than X21 is smaller than the index Y22 of the fuel amount in the catalyst deterioration diagnosis period when the responsiveness of the downstream oxygen concentration sensor 77 is moderate, i.e., lower than X21 and higher than X22. The index Y22 of the fuel amount in the catalyst deterioration diagnosis period when the responsiveness of the downstream oxygen concentration sensor 77 is moderate, i.e., lower than X21 and higher than X22, is smaller than the index Y23 of the fuel amount in the catalyst deterioration diagnosis period when the responsiveness X of the downstream oxygen concentration sensor 77 is lower than X22.

When the fuel amount variation control is performed in at least part of the catalyst deterioration diagnosis period by using the map of the association between responsiveness and fuel amount shown in FIG. 10(b), the increase and decrease of the fuel amount are as follows. The cycle (first cycle) and/or amplitude (first amplitude) of increase and decrease of the fuel amount in the catalyst deterioration diagnosis period when the responsiveness of the downstream oxygen concentration sensor 77 is higher than X21 is shorter than or smaller than the cycle (third cycle) and/or amplitude (third amplitude) of increase and decrease of the fuel amount in the catalyst deterioration diagnosis period when the responsiveness of the downstream oxygen concentration sensor 77 is moderate, i.e., lower than X21 and higher than X22. The cycle (third cycle) and/or amplitude (third amplitude) of increase and decrease of the fuel amount in the catalyst deterioration diagnosis period when the responsiveness of the downstream oxygen concentration sensor 77 is moderate, i.e., lower than X21 and higher than X22 is shorter than or smaller than the cycle (second cycle) and/or amplitude (second amplitude) of increase and decrease of the fuel amount in the catalyst deterioration diagnosis period when the responsiveness of the downstream oxygen concentration sensor 77 is lower than X22.

As indicated by the linear lines L2 and L22 in FIG. 10(a) and FIG. 10(b), which indicate comparative examples, in the known cases, the indexes (Y2 and Y23) of the fuel amount in the catalyst deterioration diagnosis period are constant irrespective of the responsiveness of the downstream oxygen concentration sensor 77, and are larger than the indexes (Y1 and Y21) of the fuel amount in the catalyst deterioration diagnosis period when the responsiveness of the downstream oxygen concentration sensor 77 is high on the lines L1 and L21 and the indexes (an index larger than Y1 and not larger than Y2 and Y22) of the fuel amount in the catalyst deterioration diagnosis period when the responsiveness of the downstream oxygen concentration sensor 77 is moderate. In other words, in a known straddled vehicle such as the vehicle recited in Patent Literature 1, a controller performs fuel amount variation control in such a way that a cycle and amplitude of increase and decrease of a fuel amount in a catalyst deterioration diagnosis period are a long cycle and large amplitude that are stored in advance and shared between the vehicles.

According to the arrangement above, the controller 80 is able to suppress the cycle and/or amplitude of increase and decrease of the fuel amount while the straddled vehicle 1 is running. It is therefore possible to further improve the drivability of the running straddled vehicle 1 in which an engine output greatly varies in accordance with increase and decrease of the fuel amount.

### <Straddled Vehicle of Fourth Embodiment>

A straddled vehicle 1 of Fourth Embodiment of the present teaching will be described. The straddled vehicle 1 of Fourth Embodiment includes the following arrangements, in addition to those of First Embodiment to Third Embodiment.

An engine 20 is an independent-throttle engine in which at least one dedicated throttle valve 45 is provided for each of at least one combustion chamber 30. In other words, the throttle valve 45 is an independent throttle. When an independent throttle engine in which at least one dedicated throttle valve is provided for each of at least one combustion chamber 30 is employed, the drivability is susceptible to an influence of a cycle and/or amplitude of increase and decrease of a fuel amount as compared to an engine in which one surge tank and at least one throttle valve are provided for plural combustion chambers 30. While the straddled vehicle 1 is running, the controller 80 suppresses the cycle and/or amplitude of increase and decrease of the fuel amount supplied to the independent-throttle engine.

It is therefore possible to further improve the drivability of the running straddled vehicle 1 having the independent-throttle engine.

### <Straddled Vehicle of Fifth Embodiment>

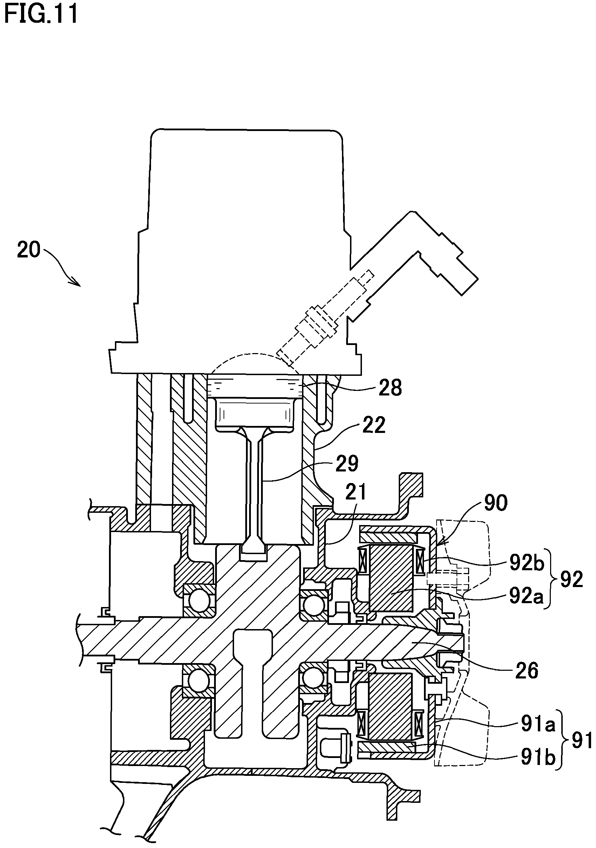

A straddled vehicle 1 of Fifth Embodiment of the present teaching will be described with reference to FIG. 11. The straddled vehicle 1 of Fifth Embodiment includes the following arrangements, in addition to those of First Embodiment to Fourth Embodiment.

An engine 20 is a flywheel magnet engine in which a rotor 91 provided at one end of a crankshaft 26 (see FIG. 2) and including a permanent magnet 91b of a rotating electric machine 90 functions as a flywheel. The engine 20 includes the rotating electric machine 90 provided at the one end of the crankshaft 26. The rotating electric machine 90 is a generator or a starter generator. The generator 90 is configured to generate power by the rotation of the crankshaft, after the start of the engine. The starter generator 90 functions as a starter motor that starts the engine 20 by rotating the crankshaft 26 at the start of the engine. Meanwhile, after the start of the engine 20, the starter generator 90 is rotated by the crankshaft 26 and functions as a generator. The rotating electric machine 90 includes the rotor 91 and a stator 92. The rotor 91 includes a rotor main body 91a and the permanent magnet 91b fixed to the rotor main body 91a. The rotor main body 91a is fixed to one end portion of the crankshaft 26 and is rotatable together with the crankshaft 26. The rotor 91 directly connected to the crankshaft 26 to be rotatable together with the crankshaft 26 as described above functions as a flywheel of the engine 20. The stator 92 includes a stator core 92a and a stator coil 92b. The stator core 92a has teeth that are provided at intervals in the circumferential direction. Each of the teeth extends outward in the radial direction. The stator coil 92b is wound onto the teeth of the stator 92. While the rotating electric machine 90 shown in FIG. 11 is an outer-rotor radial gap rotating electric machine, the generator or the starter generator of the present teaching is not limited to this. The generator or the starter generator of the present teaching may be a radial gap generator or a radial gap starter generator, or may be an axial gap generator or an axial gap starter generator. The generator or the starter generator of the present teaching may be an outer rotor generator or an outer rotor starter generator having a rotor that rotates outside the stator, or may be an inner rotor generator or an inner rotor starter generator having a rotor that rotates inside the stator.

A flywheel magnet engine in which a rotor 91 having a permanent magnet 91b of a generator 90 or a starter generator 90 and provided at one end of a crankshaft 26 functions as a flywheel is used for a light-weight straddled vehicle 1, as compared to an engine in which a rotor does not function as a flywheel. To put it differently, a flywheel magnet engine in which a rotor having a permanent magnet of a generator or a starter generator and provided at one end of a crankshaft 26 functions as a flywheel has a high power weight ratio and a large change of an engine output in response to increase and decrease of a fuel amount relative to the vehicle weight, as compared to an engine in which a rotor does not function as a flywheel. On this account, in the straddled vehicle 1 in which an engine output greatly changes in response to increase and decrease of a fuel amount relative to the vehicle weight, the drivability of the running straddled vehicle 1 can be further improved by finely controlling the cycle or amplitude of increase and decrease of the fuel amount in the fuel amount variation control.

### <Modifications of Present Teaching>

The present teaching is not limited to the above-described embodiment, and various changes can be made within the scope of the claims.

### [Reference Signs List]

1: straddled vehicle, 20: engine, 26: crankshaft, 30: combustion chamber, 46: fuel supplier, 51: exhaust passage member, 53: catalyst, 76: upstream oxygen concentration sensor, 77: downstream oxygen concentration sensor, 80: controller, 90: rotating electric machine, 91b: permanent magnet, 91: rotor

## Claims

1. A straddled vehicle (1) comprising:
an engine (20) which includes at least one combustion chamber (30);
an exhaust passage member (51) through which exhaust gas exhausted from the at least one combustion chamber (30) passes;
a catalyst (53) which is provided in the exhaust passage member (51) to purify the exhaust gas;
an upstream oxygen concentration sensor (76) which is provided upstream of the catalyst (53) in a flow direction of the exhaust gas flowing in the exhaust passage member (51) and is configured to detect oxygen concentration in the exhaust gas;
a downstream oxygen concentration sensor (77) which is provided downstream of the catalyst (53) in the flow direction of the exhaust gas flowing in the exhaust passage member (51) and is configured to detect oxygen concentration in the exhaust gas, wherein a responsiveness of the downstream oxygen concentration sensor (77) is low if the responsiveness of the downstream oxygen concentration sensor (77) exceeds a first threshold (X11, X2, X22) and the responsiveness of the downstream oxygen sensor (77) is high if the responsiveness of the downstream oxygen concentration sensor (77) is lower than the first threshold (X11) or is lower than a second threshold (X1, X21) which is lower than the first threshold (X2, X22);
a fuel supplier (46) which is configured to supply fuel to the at least one combustion chamber (30); and
a controller (80) which is configured to perform fuel amount variation control of increasing and decreasing a fuel amount supplied to the at least one combustion chamber (30) by controlling the fuel supplier (46) in at least part of a catalyst deterioration diagnosis period in which a state of deterioration of the catalyst (53) is diagnosed and at least part of a catalyst deterioration non-diagnosis period in which the state of deterioration of the catalyst (53) is not diagnosed, and to diagnose the state of deterioration of the catalyst (53) at least based on a signal supplied from the downstream oxygen concentration sensor (77) in the catalyst deterioration diagnosis period,
wherein the controller (80) is configured to:
in the fuel amount variation control, correct the fuel amount so that the fuel amount repeatedly increases and decreases, and determine the fuel amount by increasing or decreasing a correction amount relative to a basic fuel amount,
the controller (80) is further configured to:
(I) diagnose the state of deterioration of the catalyst (53) while the straddled vehicle (1) is running;
(II) in the at least part of the catalyst deterioration diagnosis period, perform the fuel amount variation control so that (1) a first cycle that is a cycle of increase and decrease of the fuel amount when responsiveness of the downstream oxygen concentration sensor (77) is high is shorter than a second cycle that is a cycle of increase and decrease of the fuel amount when the responsiveness of the downstream oxygen concentration sensor (77) is low and/or (2) a first amplitude that is an amplitude of increase and decrease of the fuel amount when the responsiveness of the downstream oxygen concentration sensor (77) is high is smaller than a second amplitude that is an amplitude of increase and decrease of the fuel amount when the responsiveness of the downstream oxygen concentration sensor (77) is low; and
(III) in the at least part of the catalyst deterioration diagnosis period, suppress a cycle and/or amplitude of increase and decrease of the fuel amount while the straddled vehicle (1) is running, as compared to a case if the fuel amount variation control is performed so that a cycle and amplitude of increase and decrease of the fuel amount are identical with the second cycle and the second amplitude irrespective of the responsiveness of the downstream oxygen concentration sensor (77).

2. The straddled vehicle (1) according to claim 1, wherein the controller (80) is further configured to:
store responsiveness data related to the responsiveness of the downstream oxygen concentration sensor (77); and
in the at least part of the catalyst deterioration diagnosis period, based on the responsiveness data related to the responsiveness of the downstream oxygen concentration sensor (77), perform the fuel amount variation control so that (1) the first cycle that is a cycle of increase and decrease of the fuel amount when the responsiveness data related to the responsiveness of the downstream oxygen concentration sensor (77) is high is shorter than the second cycle that is a cycle of increase and decrease of the fuel amount when the responsiveness data related to the responsiveness of the downstream oxygen concentration sensor (77) is low and/or (2) the first amplitude that is an amplitude of increase and decrease of the fuel amount when the responsiveness data related to the responsiveness of the downstream oxygen concentration sensor (77) is high is smaller than the second amplitude that is an amplitude of increase and decrease of the fuel amount when the responsiveness data related to the responsiveness of the downstream oxygen concentration sensor (77) is low.

3. The straddled vehicle (1) according to claim 1 or 2, wherein the controller (80) is further configured to set and store an association between responsiveness and fuel amount, which associates the responsiveness of the downstream oxygen concentration sensor (77) with the fuel amount supplied during the catalyst deterioration diagnosis period; and
in the at least part of the catalyst deterioration diagnosis period, based on the stored association between responsiveness and fuel amount, perform the fuel amount variation control so that (1) the first cycle that is a cycle of increase and decrease of the fuel amount when responsiveness of the downstream oxygen concentration sensor is high is shorter than the second cycle that is a cycle of increase and decrease of the fuel amount when the responsiveness of the downstream oxygen concentration sensor is low and/or (2) the first amplitude that is an amplitude of increase and decrease of the fuel amount when the responsiveness of the downstream oxygen concentration sensor is high is smaller than the second amplitude that is an amplitude of increase and decrease of the fuel amount when the responsiveness of the downstream oxygen concentration sensor is low.

4. The straddled vehicle (1) according to any one of claims 1 to 3, wherein the controller (80) is further configured to,
in the at least part of the catalyst deterioration diagnosis period, based on the responsiveness of the downstream oxygen concentration sensor (77), perform the fuel amount variation control so that (1) the first cycle that is a cycle of increase and decrease of the fuel amount when the responsiveness of the downstream oxygen concentration sensor (77) is high is shorter than a third cycle that is a cycle of increase and decrease of the fuel amount when the responsiveness of the downstream oxygen concentration sensor (77) is moderate and the third cycle that is a cycle of increase and decrease of the fuel amount when the responsiveness of the downstream oxygen concentration sensor (77) is moderate is shorter than the second cycle that is a cycle of increase and decrease of the fuel amount when the responsiveness of the downstream oxygen concentration sensor (77) is low and/or (2) the first amplitude that is an amplitude of increase and decrease of the fuel amount when the responsiveness of the downstream oxygen concentration sensor (77) is high is smaller than a third amplitude that is an amplitude of increase and decrease of the fuel amount when the responsiveness of the downstream oxygen concentration sensor (77) is moderate and the third amplitude that is an amplitude of increase and decrease of the fuel amount when the responsiveness of the downstream oxygen concentration sensor (77) is moderate is smaller than the second amplitude that is an amplitude of increase and decrease of the fuel amount when the responsiveness of the downstream oxygen concentration sensor (77) is low.

5. The straddled vehicle (1) according to any one of claims 1 to 4, wherein,
the engine (20) is an independent-throttle engine (20) in which at least one dedicated throttle valve (45) is provided for each of the at least one combustion chamber (30), and
the controller (80) is further configured to,
in the at least part of the catalyst deterioration diagnosis period, suppress a cycle and/or amplitude of increase and decrease of the fuel amount supplied to the independent-throttle engine (20) while the straddled vehicle (1) is running, as compared to a case if the fuel amount variation control is performed so that a cycle and amplitude of increase and decrease of the fuel amount are identical with the second cycle and the second amplitude irrespective of the responsiveness of the downstream oxygen concentration sensor (77).

6. The straddled vehicle (1) according to any one of claims 1 to 5, wherein the controller (80) is further configured to,
in the at least part of the catalyst deterioration diagnosis period, perform the fuel amount variation control based on the responsiveness of the downstream oxygen concentration sensor (77) in the catalyst deterioration non-diagnosis period.

## Patentansprüche

1. Spreizsitz-Fahrzeug (1), das folgende Merkmale aufweist:
einen Motor (20), der zumindest eine Verbrennungskammer (30) aufweist;
ein Abgaskanal-Bauteil (51), durch das Abgas strömt, das aus der zumindest einen Verbrennungskammer (30) ausgestoßen wird;
einen Katalysator (53), der in dem Abgaskanal-Bauteil (51) vorgesehen ist, um das Abgas zu reinigen;
einen stromaufwärtigen Sauerstoffkonzentrations-Sensor (76), der stromaufwärts von dem Katalysator (53) in einer Strömungsrichtung des Abgases vorgesehen ist, das in dem Abgaskanal-Bauteil (51) strömt, und der dazu konfiguriert ist, eine Sauerstoffkonzentration in dem Abgas zu erfassen;
einen stromabwärtigen Sauerstoffkonzentrations-Sensor (77), der stromabwärts von dem Katalysator (53) in der Strömungsrichtung des Abgases vorgesehen ist, das in dem Abgaskanal-Bauteil (51) strömt, und der dazu konfiguriert ist, eine Sauerstoffkonzentration in dem Abgas zu erfassen, wobei ein Ansprechverhalten des stromabwärtigen Sauerstoffkonzentrations-Sensors (77) niedrig ist, wenn das Ansprechverhalten des stromabwärtigen Sauerstoffkonzentrations-Sensors (77) einen ersten Schwellenwert (X11, X2, X22) überschreitet, und das Ansprechverhalten des stromabwärtigen Sauerstoffkonzentrations-Sensors (77) hoch ist, wenn das Ansprechverhalten des stromabwärtigen Sauerstoffkonzentrations-Sensors (77) niedriger als der erste Schwellenwert (X11) ist oder niedriger als ein zweiter Schwellenwert (X1, X21) ist, der niedriger als der erste Schwellenwert (X2, X22) ist;
eine Kraftstoff-Zuführeinrichtung (46), die dazu konfiguriert ist, der zumindest einen Verbrennungskammer (30) Kraftstoff zuzuführen; und
eine Steuerung (80), die dazu konfiguriert ist, eine Kraftstoffmengen-Variationssteuerung zum Erhöhen und Verringern einer Kraftstoffmenge, die der zumindest einen Verbrennungskammer (30) zugeführt wird, durchzuführen durch Steuern der Kraftstoff-Zuführeinrichtung (46) in zumindest einem Teil eines Katalysatorverschlechterungs-Diagnosezeitraums, in dem ein Verschlechterungszustand des Katalysators (53) diagnostiziert wird, und zumindest einem Teil eines Katalysatorverschlechterungs-Nicht-Diagnosezeitraums, in dem der Verschlechterungszustand des Katalysators (53) nicht diagnostiziert wird, und den Verschlechterungszustand des Katalysators (53) zumindest basierend auf einem Signal zu diagnostizieren, das von dem stromabwärtigen Sauerstoffkonzentrations-Sensor (77) in dem Katalysatorverschlechterungs-Diagnosezeitraum zugeführt wird,
wobei die Steuerung (80) dazu konfiguriert ist:
bei der Kraftstoffmengen-Variationssteuerung die Kraftstoffmenge zu korrigieren, so dass die Kraftstoffmenge wiederholt zunimmt und abnimmt, und die Kraftstoffmenge zu bestimmen durch Erhöhen oder Verringern einer Korrekturmenge relativ zu einer Basis-Kraftstoffmenge,
wobei die Steuerung (80) ferner dazu konfiguriert ist:
(I) den Verschlechterungszustand des Katalysators (53) zu diagnostizieren, während das Spreizsitz-Fahrzeug (1) läuft;
(II) in dem zumindest einen Teil des Katalysatorverschlechterungs-Diagnosezeitraums die Kraftstoffmengen-Variationssteuerung durchzuführen, so dass (1) ein erster Zyklus, der ein Zyklus des Erhöhens und Verringerns der Kraftstoffmenge ist, wenn das Ansprechverhalten des stromabwärtigen Sauerstoffkonzentrations-Sensors (77) hoch ist, kürzer als ein zweiter Zyklus ist, der ein Zyklus des Erhöhens und Verringerns der Kraftstoffmenge ist, wenn das Ansprechverhalten des stromabwärtigen Sauerstoffkonzentrations-Sensors (77) niedrig ist, und/oder (2) eine erste Amplitude, die eine Amplitude des Erhöhens und Verringerns der Kraftstoffmenge ist, wenn das Ansprechverhalten des stromabwärtigen Sauerstoffkonzentrations-Sensors (77) hoch ist, kleiner als eine zweite Amplitude ist, die eine Amplitude des Erhöhens und Verringerns der Kraftstoffmenge ist, wenn das Ansprechverhalten des stromabwärtigen Sauerstoffkonzentrations-Sensors (77) niedrig ist; und
(III) in dem zumindest einen Teil des Katalysatorverschlechterungs-Diagnosezeitraums einen Zyklus und/oder eine Amplitude des Erhöhens und Verringerns der Kraftstoffmenge zu unterdrücken, während das Spreizsitz-Fahrzeug (1) läuft, verglichen mit einem Fall, in dem die Kraftstoffmengen-Variationssteuerung durchgeführt wird, so dass ein Zyklus und eine Amplitude des Erhöhens und Verringerns der Kraftstoffmenge mit dem zweiten Zyklus und der zweiten Amplitude identisch sind, unabhängig von dem Ansprechverhalten des stromabwärtigen Sauerstoffkonzentrations-Sensors (77).

2. Spreizsitz-Fahrzeug (1) gemäß Anspruch 1, bei dem die Steuerung (80) ferner dazu konfiguriert ist:
Ansprechverhalten-Daten zu speichern, die sich auf das Ansprechverhalten des stromabwärtigen Sauerstoffkonzentrations-Sensors (77) beziehen; und
in dem zumindest einen Teil des Katalysatorverschlechterungs-Diagnosezeitraums basierend auf den Ansprechverhalten-Daten, die sich auf das Ansprechverhalten des stromabwärtigen Sauerstoffkonzentrations-Sensors (77) beziehen, die Kraftstoffmengen-Variationssteuerung durchzuführen, so dass (1) der erste Zyklus, der ein Zyklus des Erhöhens und Verringerns der Kraftstoffmenge ist, wenn die Ansprechverhalten-Daten, die sich auf das Ansprechverhalten des stromabwärtigen Sauerstoffkonzentrations-Sensors (77) beziehen, hoch sind, kürzer als der zweite Zyklus ist, der ein Zyklus des Erhöhens und Verringerns der Kraftstoffmenge ist, wenn die Ansprechverhalten-Daten, die sich auf das Ansprechverhalten des stromabwärtigen Sauerstoffkonzentrations-Sensors (77) beziehen, niedrig sind, und/oder (2) die erste Amplitude, die eine Amplitude des Erhöhens und Verringerns der Kraftstoffmenge ist, wenn die Ansprechverhalten-Daten, die sich auf das Ansprechverhalten des stromabwärtigen Sauerstoffkonzentrations-Sensors (77) beziehen, hoch sind, kleiner als die zweite Amplitude ist, die eine Amplitude des Erhöhens und Verringerns der Kraftstoffmenge ist, wenn die Ansprechverhalten-Daten, die sich auf das Ansprechverhalten des stromabwärtigen Sauerstoffkonzentrations-Sensors (77) beziehen, niedrig sind.

3. Spreizsitz-Fahrzeug (1) gemäß Anspruch 1 oder 2, bei dem die Steuerung (80) ferner dazu konfiguriert ist, eine Zuordnung zwischen Ansprechverhalten und Kraftstoffmenge einzustellen und zu speichern, die das Ansprechverhalten des stromabwärtigen Sauerstoffkonzentrations-Sensors (77) der Kraftstoffmenge zuordnet, die während des Katalysatorverschlechterungs-Diagnosezeitraums zugeführt wird; und
in dem zumindest einen Teil des Katalysatorverschlechterungs-Diagnosezeitraums basierend auf der gespeicherten Zuordnung zwischen Ansprechverhalten und Kraftstoffmenge die Kraftstoffmengen-Variationssteuerung durchzuführen, so dass (1) der erste Zyklus, der ein Zyklus des Erhöhens und Verringerns der Kraftstoffmenge ist, wenn das Ansprechverhalten des stromabwärtigen Sauerstoffkonzentrations-Sensors hoch ist, kürzer als der zweite Zyklus ist, der ein Zyklus des Erhöhens und Verringerns der Kraftstoffmenge ist, wenn das Ansprechverhalten des stromabwärtigen Sauerstoffkonzentrations-Sensors niedrig ist, und/oder (2) die erste Amplitude, die eine Amplitude des Erhöhens und Verringerns der Kraftstoffmenge ist, wenn das Ansprechverhalten des stromabwärtigen Sauerstoffkonzentrations-Sensors hoch ist, kleiner als die zweite Amplitude ist, die eine Amplitude des Erhöhens und Verringerns der Kraftstoffmenge ist, wenn das Ansprechverhalten des stromabwärtigen Sauerstoffkonzentrations-Sensors niedrig ist.

4. Spreizsitz-Fahrzeug (1) gemäß einem der Ansprüche 1 bis 3, bei dem die Steuerung (80) ferner dazu konfiguriert ist,
in dem zumindest einen Teil des Katalysatorverschlechterungs-Diagnosezeitraums basierend auf dem Ansprechverhalten des stromabwärtigen Sauerstoffkonzentrations-Sensors (77) die Kraftstoffmengen-Variationssteuerung durchzuführen, so dass (1) der erste Zyklus, der ein Zyklus des Erhöhens und Verringerns der Kraftstoffmenge ist, wenn das Ansprechverhalten des stromabwärtigen Sauerstoffkonzentrations-Sensors (77) hoch ist, kürzer als ein dritter Zyklus ist, der ein Zyklus des Erhöhens und Verringerns der Kraftstoffmenge ist, wenn das Ansprechverhalten des stromabwärtigen Sauerstoffkonzentrations-Sensors (77) moderat ist, und der dritte Zyklus, der ein Zyklus des Erhöhens und Verringerns der Kraftstoffmenge ist, wenn das Ansprechverhalten des stromabwärtigen Sauerstoffkonzentrations-Sensors (77) moderat ist, kürzer als der zweite Zyklus ist, der ein Zyklus des Erhöhens und Verringerns der Kraftstoffmenge ist, wenn das Ansprechverhalten des stromabwärtigen Sauerstoffkonzentrations-Sensors (77) niedrig ist, und/oder (2) die erste Amplitude, die eine Amplitude des Erhöhens und Verringerns der Kraftstoffmenge ist, wenn das Ansprechverhalten des stromabwärtigen Sauerstoffkonzentrations-Sensors (77) hoch ist, kleiner als eine dritte Amplitude ist, die eine Amplitude des Erhöhens und Verringerns der Kraftstoffmenge ist, wenn das Ansprechverhalten des stromabwärtigen Sauerstoffkonzentrations-Sensors (77) moderat ist, und die dritte Amplitude, die eine Amplitude des Erhöhens und Verringerns der Kraftstoffmenge ist, wenn das Ansprechverhalten des stromabwärtigen Sauerstoffkonzentrations-Sensors (77) moderat ist, kleiner als die zweite Amplitude ist, die eine Amplitude des Erhöhens und Verringerns der Kraftstoffmenge ist, wenn das Ansprechverhalten des stromabwärtigen Sauerstoffkonzentrations-Sensors (77) niedrig ist.

5. Spreizsitz-Fahrzeug (1) gemäß einem der Ansprüche 1 bis 4, bei dem
der Motor (20) ein Motor (20) mit unabhängiger Drossel ist, bei dem zumindest ein zweckgebundenes Drosselventil (45) für jede der zumindest einen Verbrennungskammer (30) vorgesehen ist, und
die Steuerung (80) ferner dazu konfiguriert ist,
in dem zumindest einen Teil des Katalysatorverschlechterungs-Diagnosezeitraums einen Zyklus und/oder eine Amplitude des Erhöhens und Verringerns der Kraftstoffmenge, die dem Motor (20) mit unabhängiger Drossel zugeführt wird, zu unterdrücken, während das Spreizsitz-Fahrzeug (1) läuft, verglichen mit einem Fall, in dem die Kraftstoffmengen-Variationssteuerung durchgeführt wird, so dass ein Zyklus und eine Amplitude des Erhöhens und Verringerns der Kraftstoffmenge mit dem zweiten Zyklus und der zweiten Amplitude identisch sind, unabhängig von dem Ansprechverhalten des stromabwärtigen Sauerstoffkonzentrations-Sensors (77).

6. Spreizsitz-Fahrzeug (1) gemäß einem der Ansprüche 1 bis 5, bei dem die Steuerung (80) ferner dazu konfiguriert ist,
in dem zumindest einen Teil des Katalysatorverschlechterungs-Diagnosezeitraums die Kraftstoffmengen-Variationssteuerung basierend auf dem Ansprechverhalten des stromabwärtigen Sauerstoffkonzentrations-Sensors (77) in dem Katalysatorverschlechterungs-Nicht-Diagnosezeitraum durchzuführen.

## Revendications

1. Véhicule à selle (1) comprenant :
un moteur (20) qui comporte au moins une chambre de combustion (30) ;
un élément de passage d'échappement (51) à travers lequel passe le gaz d'échappement évacué de l'au moins une chambre de combustion (30) ;
un catalyseur (53) qui est prévu dans l'élément de passage d'échappement (51) pour purifier le gaz d'échappement ;
un capteur de concentration d'oxygène en amont (76) qui est prévu en amont du catalyseur (53) dans une direction d'écoulement du gaz d'échappement circulant dans l'élément de passage d'échappement (51) et est configuré pour détecter une concentration d'oxygène dans le gaz d'échappement ;
un capteur de concentration d'oxygène en aval (77) qui est prévu en aval du catalyseur (53) dans la direction d'écoulement du gaz d'échappement circulant dans l'élément de passage d'échappement (51) et est configuré pour détecter une concentration d'oxygène dans le gaz d'échappement, dans lequel une réactivité du capteur de concentration d'oxygène en aval (77) est faible si la réactivité du capteur de concentration d'oxygène en aval (77) dépasse un premier seuil (X11, X2, X22) et la réactivité du capteur d'oxygène en aval (77) est élevée si la réactivité du capteur de concentration d'oxygène en aval (77) est inférieure au premier seuil (X11) ou est inférieure à un second seuil (X1, X21) qui est inférieur au premier seuil (X2, X22) ;
un dispositif d'alimentation en carburant (46) qui est conçu pour alimenter en carburant l'au moins une chambre de combustion (30) ; et
un dispositif de commande (80) qui est configuré pour réaliser une commande de variation de quantité de carburant en augmentant et en diminuant une quantité de carburant fournie à l'au moins une chambre de combustion (30) en commandant le dispositif d'alimentation en carburant (46) pendant au moins une partie d'une période de diagnostic de détérioration de catalyseur au cours de laquelle un état de détérioration du catalyseur (53) est diagnostiqué et au moins une partie d'une période de non-diagnostic de détérioration de catalyseur au cours de laquelle l'état de détérioration du catalyseur (53) n'est pas diagnostiqué, et pour diagnostiquer l'état de détérioration du catalyseur (53) au moins sur la base d'un signal fourni par le capteur de concentration d'oxygène en aval (77) pendant la période de diagnostic de détérioration de catalyseur,
dans lequel le dispositif de commande (80) est configuré pour :
dans la commande de variation de quantité de carburant, corriger la quantité de carburant de sorte que la quantité de carburant augmente et diminue de manière répétée, et déterminer la quantité de carburant en augmentant ou en diminuant une quantité de correction par rapport à une quantité de carburant de base,
le dispositif de commande (80) est en outre configuré pour :
(I) diagnostiquer l'état de détérioration du catalyseur (53) lorsque le véhicule à selle (1) est en marche ;
(II) pendant l'au moins une partie de la période de diagnostic de détérioration de catalyseur, réaliser la commande de variation de quantité de carburant de sorte que (1) un premier cycle qui est un cycle d'augmentation et de diminution de la quantité de carburant lorsque la réactivité du capteur de concentration d'oxygène en aval (77) est élevée est plus court qu'un deuxième cycle qui est un cycle d'augmentation et de diminution de la quantité de carburant lorsque la réactivité du capteur de concentration d'oxygène en aval (77) est faible et/ou (2) une première amplitude qui est une amplitude d'augmentation et de diminution de la quantité de carburant lorsque la réactivité du capteur de concentration d'oxygène en aval (77) est élevée est plus petite qu'une deuxième amplitude qui est une amplitude d'augmentation et de diminution de la quantité de carburant lorsque la réactivité du capteur de concentration d'oxygène en aval (77) est faible ; et
(III) pendant l'au moins une partie de la période de diagnostic de détérioration de catalyseur, supprimer un cycle et/ou une amplitude d'augmentation et de diminution de la quantité de carburant pendant que le véhicule à selle (1) est en marche, par rapport à un cas où la commande de variation de quantité de carburant est réalisée de sorte qu'un cycle et une amplitude d'augmentation et de diminution de la quantité de carburant sont identiques au deuxième cycle et à la deuxième amplitude, indépendamment de la réactivité du capteur de concentration d'oxygène en aval (77).

2. Véhicule à selle (1) selon la revendication 1, dans lequel le dispositif de commande (80) est en outre configuré pour :
stocker des données de réactivité relatives à la réactivité du capteur de concentration d'oxygène en aval (77) ; et
pendant l'au moins une partie de la période de diagnostic de détérioration de catalyseur, sur la base des données de réactivité relatives à la réactivité du capteur de concentration d'oxygène en aval (77), réaliser la commande de variation de quantité de carburant de sorte que (1) le premier cycle qui est un cycle d'augmentation et de diminution de la quantité de carburant lorsque les données de réactivité relatives à la réactivité du capteur de concentration d'oxygène en aval (77) sont élevées est plus court que le deuxième cycle qui est un cycle d'augmentation et de diminution de la quantité de carburant lorsque les données de réactivité relatives à la réactivité du capteur de concentration d'oxygène en aval (77) sont faibles et/ou (2) la première amplitude qui est une amplitude d'augmentation et de diminution de la quantité de carburant lorsque les données de réactivité relatives à la réactivité du capteur de concentration d'oxygène en aval (77) sont élevées est plus petite que la deuxième amplitude qui est une amplitude d'augmentation et de diminution de la quantité de carburant lorsque les données de réactivité relatives à la réactivité du capteur de concentration d'oxygène en aval (77) sont faibles.

3. Véhicule à selle (1) selon la revendication 1 ou 2, dans lequel le dispositif de commande (80) est en outre configuré pour établir et stocker une association entre une réactivité et une quantité de carburant, qui associe la réactivité du capteur de concentration d'oxygène en aval (77) à la quantité de carburant fournie au cours de la période de diagnostic de détérioration de catalyseur ; et
pendant l'au moins une partie de la période de diagnostic de détérioration de catalyseur, sur la base de l'association stockée entre une réactivité et une quantité de carburant, réaliser la commande de variation de quantité de carburant de sorte que (1) le premier cycle qui est un cycle d'augmentation et de diminution de la quantité de carburant lorsqu'une réactivité du capteur de concentration d'oxygène en aval est élevée est plus court que le deuxième cycle qui est un cycle d'augmentation et de diminution de la quantité de carburant lorsque la réactivité du capteur de concentration d'oxygène en aval est faible et/ou (2) la première amplitude qui est une amplitude d'augmentation et de diminution de la quantité de carburant lorsque la réactivité du capteur de concentration d'oxygène en aval est élevée est plus petite que la deuxième amplitude qui est une amplitude d'augmentation et de diminution de la quantité de carburant lorsque la réactivité du capteur de concentration d'oxygène en aval est faible.

4. Véhicule à selle (1) selon l'une quelconque des revendications 1 à 3, dans lequel le dispositif de commande (80) est en outre configuré pour,
pendant l'au moins une partie de la période de diagnostic de détérioration de catalyseur, sur la base de la réactivité du capteur de concentration d'oxygène en aval (77), réaliser la commande de variation de quantité de carburant de sorte que (1) le premier cycle qui est un cycle d'augmentation et de diminution de la quantité de carburant lorsque la réactivité du capteur de concentration d'oxygène en aval (77) est élevée est plus court qu'un troisième cycle qui est un cycle d'augmentation et de diminution de la quantité de carburant lorsque la réactivité du capteur de concentration d'oxygène en aval (77) est modérée et le troisième cycle qui est un cycle d'augmentation et de diminution de la quantité de carburant lorsque la réactivité du capteur de concentration d'oxygène en aval (77) est modérée est plus court que le deuxième cycle qui est un cycle d'augmentation et de diminution de la quantité de carburant lorsque la réactivité du capteur de concentration d'oxygène en aval (77) est faible et/ou (2) la première amplitude qui est une amplitude d'augmentation et de diminution de la quantité de carburant lorsque la réactivité du capteur de concentration d'oxygène en aval (77) est élevée est plus petite qu'une troisième amplitude qui est une amplitude d'augmentation et de diminution de la quantité de carburant lorsque la réactivité du capteur de concentration d'oxygène en aval (77) est modérée et la troisième amplitude qui est une amplitude d'augmentation et de diminution de la quantité de carburant lorsque la réactivité du capteur de concentration d'oxygène en aval (77) est modérée est plus petite que la deuxième amplitude qui est une amplitude d'augmentation et de diminution de la quantité de carburant lorsque la réactivité du capteur de concentration d'oxygène en aval (77) est faible.

5. Véhicule à selle (1) selon l'une quelconque des revendications 1 à 4, dans lequel,
le moteur (20) est un moteur à papillon indépendant (20) dans lequel au moins un papillon des gaz dédié (45) est prévu pour chacune de l'au moins une chambre de combustion (30), et
le dispositif de commande (80) est en outre configuré pour,
pendant l'au moins une partie de la période de diagnostic de détérioration de catalyseur, supprimer un cycle et/ou une amplitude d'augmentation et de diminution de la quantité de carburant fournie au moteur à papillon indépendant (20) lorsque le véhicule à selle (1) est en marche, par rapport à un cas où la commande de variation de quantité de carburant est réalisée de sorte qu'un cycle et une amplitude d'augmentation et de diminution de la quantité de carburant sont identiques au deuxième cycle et à la deuxième amplitude, indépendamment de la réactivité du capteur de concentration d'oxygène en aval (77).

6. Véhicule à selle (1) selon l'une quelconque des revendications 1 à 5, dans lequel le dispositif de commande (80) est en outre configuré pour,
pendant l'au moins une partie de la période de diagnostic de détérioration de catalyseur, réaliser la commande de variation de quantité de carburant sur la base de la réactivité du capteur de concentration d'oxygène en aval (77) pendant la période de non-diagnostic de détérioration de catalyseur.
